# EUROPÄISCHE PATENTSCHRIFT

(11) **EP 3 576 905 B1**
(45) Veröffentlichungstag und Bekanntmachung des Hinweises auf die Patenterteilung: **11.01.2023**
(21) Anmeldenummer: 17828655.5
(22) Anmeldetag: 20.11.2017
(51) Int. Cl.: B23Q 11/00

(54) **ZUBEHÖRVORRICHTUNG FÜR EINE HANDWERKZEUGMASCHINE**
ACCESSORY DEVICE FOR A HAND-HELD POWER TOOL
DISPOSITIF ACCESSOIRE CONÇU POUR UNE MACHINE-OUTIL

(30) Priorität: 31.01.2017 DE 102017201558
(43) Veröffentlichungstag der Anmeldung: 11.12.2019
(73) Patentinhaber: Robert Bosch GmbH, 70442 Stuttgart (DE)
(72) Erfinder: ULLRICH, Andre, 70771 Leinfelden-Echterdingen (DE); FISCHLE, Benjamin Nikolas, 71711 Murr (DE); DIETEL, Juergen, 70597 Stuttgart (DE); FROEHLING, Holger, 70597 Stuttgart (DE); ORENDI, Erwin, 73728 Esslingen (DE)
(86) Internationale Anmeldenummer: PCT/EP2017/079700
(87) Internationale Veröffentlichungsnummer: WO 2018/141430

(56) Entgegenhaltungen:
- EP-A1- 2 366 490
- EP-A1- 2 517 824
- EP-A1- 2 599 585
- EP-A2- 1 872 900
- US-A- 5 467 835

## Beschreibung

### Stand der Technik

Die vorliegende Erfindung betrifft eine Zubehörvorrichtung für eine Handwerkzeugmaschine gemäß dem Oberbegriff des Anspruchs 1. Eine solche Zubehörvorrichtung ist aus der EP 2 517 824 A1 bekannt.

In der EP 2 185 316 A1 ist eine Handwerkzeugmaschine mit einer Staubabsaugungseinrichtung, die eine Staubbox zur Aufnahme von Staub umfasst, beschrieben.

### Offenbarung der Erfindung

Die Erfindung betrifft eine Zubehörvorrichtung für eine Handwerkzeugmaschine gemäß dem Anspruch 1, insbesondere für eine Handwerkzeugmaschine mit einem Schlagwerk, mit einer Staubsammelbox, wobei die Staubsammelbox ein Gehäuse, das über eine erste Befestigungseinheit mit einem Gehäuse der Zubehörvorrichtung verbindbar ausgebildet ist, und eine Filtereinheit, die dazu ausgebildet ist, einen Luftstrom zu filtern, aufweist, und wobei die Filtereinheit über eine zweite Befestigungseinheit mit dem Gehäuse der Staubsammelbox verbindbar ausgebildet ist. Es wird vorgeschlagen, dass die Filtereinheit ein erstes staubsammelboxseitig angeordnetes Dichtelement und ein zweites zubehörvorrichtungsseitig angeordnetes Dichtelement aufweist, über die die Filtereinheit gegenüber dem Gehäuse der Staubsammelbox und einem Gehäuse der Zubehörvorrichtung abdichtbar ist.

Die Zubehörvorrichtung ist insbesondere als eine nachrüstbare Absaugung zur Entfernung von Staubgut am Einsatzort der Handwerkzeugmaschine während des Betriebs der Handwerkzeugmaschine und zur Aufnahme dieses Staubguts in der Staubsammelbox ausgebildet. Bei der Handwerkzeugmaschine handelt es sich insbesondere um eine Handwerkzeugmaschine, bei der während der Bearbeitung einer Arbeitsfläche Material aus dieser entfernt wird. Beispielhaft kann es sich bei der Handwerkzeugmaschine um eine Bohrmaschine, einen Bohrhammer, einen Winkelschleifer, eine Kreissäge oder dergleichen handeln. Die Zubehörvorrichtung ist insbesondere lösbar mit der Handwerkzeugmaschine verbunden. Unter einer lösbaren Verbindung soll insbesondere eine Verbindung verstanden werden, die werkzeuglos lösbar ist. Im Gegensatz dazu soll unter einer Befestigung im Zusammenhang mit dieser Anmeldung insbesondere eine mittels eines Werkzeugs lösbare Verbindung verstanden werden. Die erste und die zweite Befestigungseinheit können jeweils zur kraft- und/oder formschlüssigen Verbindung ausgebildet sein. Durch die erste und zweite Befestigungseinheit können die Staubsammelbox und die Filtereinheit besonders leicht von der Zubehörvorrichtung gelöst werden, wodurch die Entleerung der Staubsammelbox und die Reinigung der Filtereinheit erleichtert wird.

Der Transport des Staubguts vom Einsatzort der Handwerkzeugmaschine in die Staubsammelbox erfolgt mittels eines Luftkanals. Während des Betriebs der Handwerkzeugmaschine und/oder der Zubehörvorrichtung strömt ein Luftstrom vom Einsatzort der Handwerkzeugmaschine über den Luftkanal in die Staubsammelbox hinein. Der Luftstrom kann sowohl durch die Zubehörvorrichtung als auch durch die Handwerkzeugmaschine erzeugt werden. Insbesondere weist die Zubehörvorrichtung eine Lüftereinheit mit einem Elektromotor und einem Lüfterelement zur Erzeugung des Luftstroms auf. Alternativ ist auch denkbar, dass der Luftstrom durch eine Motorkühlung der Handwerkzeugmaschine erzeugt wird. Die Staubsammelbox weist zumindest eine Öffnung auf, durch die das Staubgut in der Staubsammelbox aufnehmbar ist. Weiterhin weist die Staubsammelbox eine Eingangsöffnung auf, durch die der Luftstrom in die Staubsammelbox führbar ist und eine Ausgangsöffnung, durch die der gefilterte Luftstrom die Staubsammelbox verlässt. In der Staubsammelbox wird das Staubgut aus dem Luftstrom mittels der Filtereinheit gefiltert. Die Filtereinheit ist bevorzugt im Bereich der Ausgangsöffnung angeordnet.

Der Luftstrom verlässt das Gehäuse der Zubehörvorrichtung oder das Gehäuse der Handwerkzeugmaschine im Bereich der den Luftstrom erzeugenden Elemente oder in Strömungsrichtung hinter diesem Bereich. Das erste und das zweite Dichtelement sind vorteilhaft derart angeordnet, dass kein Staubgut an der Filtereinheit vorbei in Gehäusebereiche gelangen kann, die sensible Elektronik oder den Elektromotor aufweisen. Unter einer staubsammelboxseitigen Anordnung des ersten Dichtelements soll dabei insbesondere verstanden werden, dass das erste Dichtelement an der Filtereinheit und/oder an dem Gehäuse der Staubsammelbox befestigt ist und am Gehäuse der Staubsammelbox und/oder an der Filtereinheit anliegt. Analog soll unter einer zubehörvorrichtungsseitigen Anordnung des zweiten Dichtelements insbesondere verstanden werden, dass das zweite Dichtelement an der Filtereinheit und/oder an dem Gehäuse der Zubehörvorrichtung befestigt ist und am Gehäuse der Zubehörvorrichtung und/oder an der Filtereinheit anliegt. Das Dichtelement ist vorteilhaft elastisch ausgebildet, um fertigungsbedingte Spalte an den Grenzflächen zwischen den miteinander lösbaren Filtereinheit und Staubsammelbox sowie Filtereinheit und Zubehörvorrichtung abzudichten.

Des Weiteren weist die erste Befestigungseinheit zumindest ein erstes Betätigungselement auf, wobei über eine Betätigung des ersten Betätigungselements die Verbindung zwischen der Staubsammelbox und der Zubehörvorrichtung lösbar ist. Vorteilhaft kann die Staubsammelbox von der Zubehörvorrichtung durch eine Betätigung des ersten Betätigungselements leicht gelöst werden. Das erste Betätigungselement kann beispielhaft als ein federndes Rastelement ausgebildet sein, das an der Außenseite der Staubsammelbox angeordnet ist. Bevorzugt weist die erste Befestigungseinheit mehrere Betätigungselemente auf, die die Staubsammelbox und/oder die Zubehörvorrichtung U-förmig umgreifen, wodurch ein ungewolltes Lösen der Verbindung verhindert werden kann.

Weiterhin weist die zweite Befestigungseinheit zumindest ein zweites Betätigungselement auf, wobei über eine Betätigung des zweiten Betätigungselements die Verbindung zwischen der Staubsammelbox und der Filtereinheit lösbar ist. Vorteilhaft kann die Filtereinheit von der Staubsammelbox durch eine Betätigung des zweiten Betätigungselements leicht gelöst werden, um die Filtereinheit zu reinigen. Bevorzugt weist die zweite Befestigungseinheit mehrere Betätigungselemente auf, die die Staubsammelbox und/oder die Filtereinheit U-förmig umgreifen. Insbesondere ist das zumindest eine zweite Betätigungselement der zweiten Befestigungseinheit im verbundenen Zustand durch das Gehäuse der Zubehörvorrichtung abgeschirmt, sodass vorteilhaft keine Betätigung des zweiten Betätigungselements während des Betriebs möglich ist. Die zweite Befestigungseinheit ist zudem außerhalb eines Bereichs der Staubsammelbox angeordnet, in welchem das gefilterte Staubgut aufgenommen wird.

Des Weiteren weist die Filtereinheit ein Filterelement auf, welches an einem Rahmenelement befestigt ist, wodurch vorteilhaft die Stabilität der Filtereinheit erhöht wird. Das Rahmenelement ist insbesondere aus einem Kunststoff gefertigt, der wesentlich härter als das Filterelement ausgebildet ist. Vorteilhaft umschließt das Rahmenelement das Filterelement seitlich, damit das Filterelement ohne eine Verformung am Rahmenelement greifbar ist.

Zudem ist das zumindest eine Betätigungselement der zweiten Befestigungseinheit an dem Rahmenelement angeformt, womit vorteilhaft eine besonders kompakte zweite Befestigungseinheit realisierbar ist. Im Zusammenhang dieser Anmeldung soll unter einem Element, das an ein anderes angeformt ist, insbesondere verstanden werden, dass die beiden Elemente einteilig ausgebildet sind.

Weiterhin ist die Staubsammelbox in radialer Richtung zu einer Arbeitsachse der Handwerkzeugmaschine von dem Gehäuse der Zubehörvorrichtung aufnehmbar, wodurch vorteilhaft eine schnelle und robuste Verbindung ermöglicht wird.

Des Weiteren ist die Staubsammelbox in Umfangsrichtung zumindest teilweise von dem Gehäuse der Zubehörvorrichtung umschlossen, wodurch die Staubsammelbox vorteilhaft durch das Gehäuse der Zubehörvorrichtung geschützt werden kann.

Zudem weist das Gehäuse der Zubehörvorrichtung zumindest eine Ausnehmung auf, über die der Füllstand der Staubsammelbox erkennbar ist. Die Staubsammelbox ist transparent ausgebildet, sodass vorteilhaft ein Füllstand der Staubsammelbox mit Staubgut von außen, insbesondere ohne ein Öffnen der Staubsammelbox, erkennbar ist. Die Ausnehmung erstreckt sich über zumindest 50% der Länge der Staubsammelbox der Schwerkraft, bevorzugt über zumindest 75% der Länge der Staubsammelbox entlang der Schwerkraft. Durch eine längliche Ausnehmung kann vorteilhaft der Füllstand der Staubsammelbox über einen großen Bereich verfolgt werden. Es ist ebenfalls denkbar, dass die Ausnehmung derart ausgebildet ist, dass der Füllstand und die Filtereinheit zumindest teilweise von außen erkennbar sind.

Weiterhin liegt die Staubsammelbox, insbesondere die Filtereinheit, zumindest teilweise im an der Zubehörvorrichtung befestigten Zustand an einem mit Spiel gelagerten Gehäuseelement an. Insbesondere ist das Gehäuseelement leicht beweglich im Gehäuse der Zubehörvorrichtung gelagert, wodurch vorteilhaft beim Verbinden der Staubsammelbox mit der Zubehörvorrichtung ein Verkanten zwischen den beiden Teilen verhindert werden kann.

Darüber hinaus wird beispielsweise eine Zubehörvorrichtung für eine Handwerkzeugmaschine beschrieben, insbesondere für eine Handwerkzeugmaschine mit einem Schlagwerk, mit einem Gehäuse, das verbindbar mit der Handwerkzeugmaschine ausgebildet ist, und mit einem Elektromotor. Es wird vorgeschlagen, dass die Zubehörvorrichtung eine Dämpfungseinheit aufweist, die einteilig mit dem Gehäuse der Zubehörvorrichtung zur Dämpfung der durch den Elektromotor verursachten Vibrationen ausgebildet ist.

Vorteilhaft kann durch die Dämpfungseinheit die Haltbarkeit der Lagerung des Elektromotors und damit die Lebensdauer der Zubehörvorrichtung deutlich verlängert werden.

Die Verbindung der Zubehörvorrichtung mit der Handwerkzeugmaschine erfolgt zumindest mechanisch, beispielsweise über eine kraft- und/oder formschlüssige Verbindung. Insbesondere ist die Zubehörvorrichtung zudem elektrisch mit der Handwerkzeugmaschine verbunden, beispielsweise über zumindest ein elektrisches Kontaktelement, das an einem Kopplungsbereich der Zubehörvorrichtung angeordnet ist. Vorteilhaft kann über das zumindest eine elektrische Kontaktelement die Zubehörvorrichtung, insbesondere der Elektromotor der Zubehörvorrichtung, mit Energie versorgt werden. Es ist ebenfalls denkbar, dass über das zumindest eine elektrische Kontaktelement Regel- und/oder Steuersignale von der Handwerkzeugmaschine auf die Zubehörvorrichtung übertragbar sind.

Der Elektromotor der Zubehörvorrichtung kann, wie oben beschrieben, als Teil einer Lüftereinheit ausgebildet sein und ein Lüfterelement zur Erzeugung eines Luftstroms antreiben. Die beschriebene Dämpfungseinheit beschränkt sich allerdings nicht auf diese Ausführungsform des Elektromotors, sondern ist auch für Elektromotoren in Zubehörvorrichtungen mit anderem Einsatzzwecken denkbar.

Des Weiteren weist die Dämpfungseinheit zumindest ein Dämpfungselement auf, das an der äußeren Umfangsfläche des Elektromotors tangential anliegt und insbesondere den Elektromotor radial kraftbeaufschlagt. Das Dämpfungselement ist insbesondere dazu ausgebildet, die Vibrationen des Elektromotors mittels einer Verformung und/oder einer Verbiegung des Dämpfungselements und/oder durch Reibung an einer Kontaktfläche des Dämpfungselements mit dem Elektromotor zu dämpfen. Insbesondere ist das Dämpfungselement als ein passives Dämpfungselement ausgebildet, welches im Gegensatz zu einem aktiven Dämpfungselement ohne Sensoren oder Regelelektronik ausgebildet, und somit einfach und kostengünstig realisierbar, ist. Die Dämpfungseinheit ist zumindest teilweise einteilig mit dem Gehäuse der Zubehörvorrichtung ausgebildet, sodass die Wärme, die bei der Dämpfung der Vibrationen entsteht, effektiv über das Gehäuse der Handwerkzeugmaschine an die Umgebung abgegeben werden kann.

Der Elektromotor ist zumindest teilweise im Wesentlichen zylindrisch ausgebildet. Unter einem tangentialen Anliegen soll in diesem Zusammenhang insbesondere verstanden werden, dass die Längserstreckung des Dämpfungselements im Wesentlichen parallel zu einem Durchmesser des Elektromotors verläuft und die Kontaktfläche des Dämpfungselements mit dem Elektromotor höchstens 25%, vorzugsweise insbesondere 10%, der Länge des Dämpfungselements entspricht. Unter einer radialen Kraftbeaufschlagung soll in diesem Zusammenhang insbesondere verstanden werden, dass das Dämpfungselement radial zu der Längserstreckung des Elektromotors in Richtung eine Längsachse des Elektromotors vorgespannt ist. Vorteilhaft kann hierdurch ein spielfreies Anliegen des Dämpfungselements an dem Elektromotor realisiert werden.

Weiterhin weist die Dämpfungseinheit zumindest zwei Dämpfungselemente auf, die an gegenüberliegenden Seiten der Umfangsfläche des Elektromotors zumindest anliegen. Die beiden Seiten werden insbesondere durch eine Ebene entlang des Durchmessers des Elektromotors voneinander getrennt. Vorteilhaft ist ein Dämpfungselement dazu ausgebildet, den Elektromotor während des Betriebs der Zubehörvorrichtung entlang der Schwerkraft radial mit einer Kraft zu beaufschlagen, und das andere Dämpfungselement ist dazu ausgebildet, den Elektromotor während des Betriebs entgegen der Schwerkraft mit einer Kraft zu beaufschlagen. Durch ein zweites Dämpfungselement kann die Dämpfung besonders effektiv gestaltet werden.

Zudem ist das zumindest eine Dämpfungselement als ein Federbalkenelement ausgebildet. Unter einem Federbalkenelement soll in diesem Zusammenhang insbesondere ein verformbares und/oder verbiegbares Balkenelement verstanden werden, das zwei Enden aufweist, wobei ein Ende unbeweglich befestigt ist und das andere Ende unbefestigt ist. Im Gegensatz zu einer Verformung, werden bei einer Verbiegung stets zwei gegenüberliegende Seiten miteinander verschoben. Insbesondere ist das nicht freie Ende des Federbalkenelements stoffschlüssig an dem Gehäuse der Zubehörvorrichtung befestigt, beispielsweise durch Verschweißen, Verkleben oder durch eine Anformung des Federbalkenelements an dem Gehäuse.

Des Weiteren wird vorgeschlagen, dass das Federbalkenelement eine Biegesteifigkeit in einem Bereich von 1 N/mm bis 150 N/mm, vorteilhaft aufweist. Vorteilhaft kann dadurch eine besonders effiziente Dämpfung realisiert werden. Vorzugsweise weist das Federbalkenelement eine Biegesteifigkeit in einem Bereich von 3 N/mm bis 115 N/mm auf. Bevorzugt weist die Dämpfungseinheit zumindest zwei Federbalkenelemente auf, wobei zumindest ein Federbalkenelement eine Biegesteifigkeit von unter 10 N/mm und zumindest ein weiteres Federbalkenelement eine Biegesteifigkeit von über 100 N/mm aufweist.

Weiterhin ist der Elektromotor über einen Aufnahmeflansch an einem ersten stirnseitigen Ende des Elektromotors im Gehäuse der Zubehörvorrichtung gelagert. Der Elektromotor ist insbesondere kraft- und/oder formschlüssig an dem Aufnahmeflansch befestigt. Der Aufnahmeflansch ist sowohl axial als auch rotatorisch im Gehäuse der Zubehörvorrichtung gelagert, bevorzugt fixiert. Somit wird der Elektromotor vorteilhaft während des Betriebs durch den Aufnahmeflansch gegen ein Verdrehen gesichert.

Zudem ist die Dämpfungseinheit an einem dem stirnseitigen Ende gegenüberliegenden Endbereich des Elektromotors angeordnet. Unter dem gegenüberliegenden Endbereich soll insbesondere ein Bereich von höchstens 30%, vorteilhaft 15%, der Länge der äußeren Umfangsfläche des Elektromotors, an der das zumindest eine Dämpfungselement anliegt, verstanden werden.

Des Weiteren ist im demontierten Zustand der Zubehörvorrichtung der Durchmesser des Elektromotors größer ausgebildet, als der Abstand zwischen den Dämpfungselementen in einem Kontaktbereich mit dem Elektromotor. In diesem Zusammenhang soll unter einem demontierten Zustand der Zubehörvorrichtung insbesondere eine ohne Elektromotor montierte Zubehörvorrichtung verstanden werden. Somit kann eine radiale Kraftbeaufschlagung durch die Dämpfungselemente vorteilhaft dadurch realisiert werden, dass die gegenüberliegenden Dämpfungselemente entgegen einer Federkraft voneinander weggebogen werden. Der Kontaktbereich der Dämpfungselemente mit dem Elektromotor ist insbesondere der Bereich, in welchem die Dämpfungselemente den Elektromotor beaufschlagen beziehungsweise an dem Elektromotor anliegen.

Zudem umfasst das Gehäuse der Zubehörvorrichtung eine erste Gehäusehalbschale und eine zweite Gehäusehalbschale, wobei zumindest ein Dämpfungselement, insbesondere alle Dämpfungselemente, in der zweiten Gehäusehalbschale angeordnet sind. In diesem Zusammenhang soll unter "in einer Gehäusehalbschale angeordnet" insbesondere verstanden werden, dass das Dämpfungselement an der einen Gehäusehalbschale befestigt ist und teilweise in die andere Gehäusehalbschale hineinragt. Vorteilhaft kann durch einen derartigen Aufbau des Gehäuses und eine derartige Anordnung der Dämpfungselemente eine besonders einfache Montage der Zubehörvorrichtung realisiert werden. Es ist ebenfalls denkbar, dass zumindest ein Dämpfungselement in der ersten Gehäusehalbschale und zumindest ein Dämpfungselement in der zweiten Gehäusehalbschale angeordnet ist.

Es wird auch beispielsweise eine Zubehörvorrichtung für eine Handwerkzeugmaschine beschrieben, insbesondere für eine Handwerkzeugmaschine mit einem Schlagwerk, mit einem Gehäuse, das verbindbar mit der Handwerkzeugmaschine ausgebildet ist, mit einem Lüfterelement, das dazu ausgebildet ist, einen Luftstrom zum Transport von Staubgut zu erzeugen, und mit einem Elektromotor, der dazu ausgebildet ist, das Lüfterelement anzutreiben. Es wird vorgeschlagen, dass das Gehäuse der Zubehörvorrichtung zumindest eine Luftdurchlassöffnung aufweist, über die der Elektromotor gekühlt werden kann. Vorteilhaft kann durch die Luftdurchlassöffnung eine effiziente Kühlung des Elektromotors realisiert werden. Zudem ist die zumindest eine Luftdurchlassöffnung im Bereich des Elektromotors, insbesondere im Bereich radial und/oder axial außerhalb des Elektromotors, angeordnet. Durch eine derartige Anordnung der Luftdurchlassöffnung kann vorteilhaft die Effizienz der Kühlung weiter erhöht werden. Unter einem Bereich radial außerhalb des Elektromotors soll in diesem Zusammenhang insbesondere ein Bereich verstanden werden, der von einer Gerade geschnitten wird, die radial zu einer Rotationsachse des Elektromotors verläuft und vorteilhaft einen Luftauslass des Elektromotos schneidet. Unter einem Bereich axial außerhalb des Elektromotors soll in diesem Zusammenhang insbesondere ein Bereich verstanden werden, der von einer Gerade geschnitten wird, die parallel zu einer Rotationsachse des Elektromotors verläuft und vorteilhaft einen Lufteinlass des Elektromotors schneidet. Der Lufteinlass und/oder der Luftauslass sind insbesondere als Öffnungen im Außengehäuse des Elektromotors ausgebildet.

Des Weiteren ist im Bereich der zumindest einen Luftdurchlassöffnung zumindest ein Luftleitelement angeordnet, das insbesondere dazu ausgebildet ist, den Elektromotor abzuschatten. Unter abgeschattet soll in diesem Zusammenhang insbesondere verstanden werden, dass jede Gerade, die von der Luftdurchlassöffnung ausgeht und am Elektromotor endet, das Luftleitelement schneidet. Somit werden durch das zumindest eine Luftleitelement Partikel, die über die Luftdurchlassöffnung in das Gehäuse der Zubehörvorrichtung eindringen, vorteilhaft abgelenkt, wodurch diese Partikel ihre kinetische Energie verlieren und der Elektromotor vor Beschädigung geschützt wird. Insbesondere ist das zumindest eine Luftleitelement im Bereich der Luftdurchlassöffnung an das Gehäuse der Zubehörvorrichtung angeformt.

Weiterhin ist an der zumindest einen Luftdurchlassöffnung zumindest ein Filterelement angeordnet. Durch das Filterelement können vorteilhaft kleinere und größere Partikel aus dem in das Gehäuse eindringenden Luftstrom effektiv gefiltert werden.

Zudem ist das zumindest eine Luftleitelement von zumindest einem Stützelement zumindest teilweise umschlossen, wobei das Stützelement den Elektromotor seitlich abstützt und insbesondere eine Filteraufnahmetasche für das Filterelement bildet. Durch das Stützelement wird vorteilhaft die Lagerung des Elektromotors unterstützt und zudem ein Einsetzen des Filterelements ermöglicht, was die Montage der Zubehörvorrichtung vereinfacht. Vorzugsweise liegt das Stützelement derart an dem Luftauslass des Elektromotors an, dass der Luftauslass insbesondere vollständig von dem Stützelement umschlossen ist. Insbesondere wird der Lufteinlass des Elektromotors von dem Luftauslass des Elektromotors mittels des Stützelements strömungstechnisch getrennt. Vorzugsweise wird dadurch die Abluft des Elektromotors in einem vom übrigen Gehäuse getrennten Abluftkanal in Richtung zumindest einer Luftdurchlassöffnung geführt. Somit kann vorteilhaft sichergestellt werden, dass der Elektromotor nicht seine eigene Abluft durch den Lufteinlass wieder aufnimmt.

Des Weiteren ist das Filterelement aus einem Filterschaum ausgebildet und an einer Innenseite des Gehäuses der Zubehörvorrichtung eingesetzt, insbesondere verklebt. Durch das Verkleben des Filterelements an der Innenseite des Gehäuses kann ein ungewolltes Lösen des Filterelements von seiner Position verhindert werden.

Es wird des Weiteren beispielsweise eine Zubehörvorrichtung für eine Handwerkzeugmachine beschrieben, insbesondere für eine Handwerkzeugmaschine mit einem Schlagwerk, mit einem Gehäuse, das verbindbar mit der Handwerkzeugmaschine ausgebildet ist und mit einer Teleskopeinheit, die ein axial beweglich im Gehäuse gelagertes Teleskopelement aufweist. Es wird vorgeschlagen, dass zwischen der Teleskopeinheit und dem Gehäuse zumindest ein Sicherungselement angeordnet ist, das dazu ausgebildet ist, einem Verschleiß entgegenzuwirken.

Die Teleskopeinheit ist insbesondere in einer Gehäuseführung bestehend aus Führungselementen axial beweglich im Gehäuse der Zubehörvorrichtung gelagert. Um eine leichtgängige und axial beweglich Lagerung der Teleskopeinheit zu realisieren, ist vorteilhaft ein geringes Spiel zwischen Teleskopeinheit und Gehäuseführung vorgesehen. Sowohl die Teleskopeinheit als auch die Gehäuseführung weisen Kontaktflächen auf, an denen die Teleskopeinheit und die Gehäuseführung aneinander anliegen. Durch eine Bewegung der Teleskopeinheit werden die Kontaktflächen relativ zueinander bewegt und es entsteht Reibung. Durch diese Reibung tritt ein Verschleiß, also ein Abtragen von Material an den Kontaktflächen, auf. Somit handelt es sich bei den Kontaktflächen um Verschleißflächen. Vorteilhaft wirkt das Sicherungselement einem zunehmenden Verschleiß entgegen, indem das Sicherungselement dazu ausgebildet ist, den Verschleiß zu verlangsamen und/oder eine teilweise spielfreie Lagerung der Teleskopeinheit zu ermöglichen.

Des Weiteren ist das zumindest eine Sicherungselement an einer Innenseite des Gehäuses und/oder an der Teleskopeinheit angeordnet. Vorteilhaft wird dadurch dem Verschleiß besonders effektiv entgegengewirkt. Insbesondere ist das Sicherungselement im Bereich eine Verschleißfläche angeordnet. Besonders bevorzugt ist das Sicherungselement zumindest teilweise als Verschleißfläche ausgebildet. Insbesondere können die Sicherungselemente in einer der Gehäusehalbschalen, vorteilhaft in beiden Gehäusehalbschalen, angeordnet sein.

Weiterhin spannt das Sicherungselement die Teleskopeinheit in zumindest eine erste Richtung vor. Insbesondere ist das Sicherungselement derart ausgebildet, dass bei zunehmenden Verschleiß zunächst das Maß der Vorspannung durch das Sicherungselement verringert wird, ohne dass das Spiel zwischen der Teleskopeinheit und dem Gehäuse im Bereich des Sicherungselements vergrößert wird. Insbesondere wirkt das Sicherungselement im Wesentlichen entlang der Schwerkraft während des Betriebs der Zubehörvorrichtung.

Zudem spannt zumindest ein weiteres Sicherungselement die Teleskopeinheit in eine der ersten Richtung entgegengesetzten Richtung vor. Vorteilhaft wird hierdurch dem Verschleiß noch effizienter entgegengewirkt.

Des Weiteren spannt zumindest ein zusätzliches Sicherungselement die Teleskopeinheit in zumindest eine weitere Richtung vor, die sich insbesondere senkrecht zu der ersten Richtung erstreckt. Vorteilhaft wird hierdurch dem Verschleiß in einer weiteren Richtung effizient entgegengewirkt.

Weiterhin ist das Sicherungselement in einem Eingangsbereich innerhalb des Gehäuses für die Teleskopeinheit angeordnet. Vorteilhaft kann hierdurch dem Verschleiß an der Stelle entgegengewirkt werden, an dem er am größten ist. Der Eingangsbereich erstreckt sich axial entlang der Bewegungsrichtung der Teleskopeinheit insbesondere über den Bereich der Verschleißflächen, die sowohl in einem eingefahrenen als auch ausgefahrenen Zustand der Teleskopeinheit in Kontakt miteinander stehen.

Zudem ist das Sicherungselement zumindest teilweise als ein mechanisches Energiespeicherelement ausgebildet, insbesondere als Federblech, als Kugeldruckstück oder als Rastkappe. Vorzugsweise beaufschlagt das Sicherungselement die Gehäuseführung oder die Teleskopeinheit direkt und unabhängig von der Position der Teleskopeinheit mit einer Kraft. Das Sicherungselement kann teilweise einstückig mit dem Gehäuse der Zubehörvorrichtung ausgebildet sein. Insbesondere kann das mechanische Energiespeicherelement im Gehäuse der Zubehörvorrichtung gelagert sein.

Des Weiteren bildet das Sicherungselement erst nach Erreichen einer Verschleißschwelle einen Kontakt mit der Teleskopeinheit und/oder dem Gehäuse aus. Vorteilhaft kann dadurch nach Erreichen der Verschleißschwelle der Verschleiß verlangsamt werden. Unter einer Verschleißschwelle soll insbesondere verstanden werden, dass erst nach einem erwarteten eingetretenen Verschleiß das Sicherungselement eine Verschleißfläche bildet und sowohl in Kontakt mit der Teleskopeinheit als auch dem Gehäuse kommt.

Weiterhin wird es beispielsweise eine Zubehörvorrichtung für eine Handwerkzeugmaschine beschrieben, insbesondere für eine Handwerkzeugmaschine mit einem Schlagwerk, mit einem Gehäuse, das verbindbar mit der Handwerkzeugmaschine ausgebildet ist und mit einer Teleskopeinheit, die ein axial beweglich im Gehäuse gelagertes Teleskopelement aufweist. Es wird vorgeschlagen, dass an einem stirnseitigen Ende der Teleskopeinheit ein Saugkopf angeordnet ist, wobei der Saugkopf über ein Adapterelement an der Teleskopeinheit befestigt ist und ein Staubaufnahmeelement lösbar mit dem Adapterelement verbunden ist.

Während des Betriebs der Zubehörvorrichtung beaufschlagt der Saugkopf insbesondere mittels Anschlagflächen die Arbeitsfläche am Einsatzort der Handwerkzeugmaschine, insbesondere um den Einsatzort der Handwerkzeugmaschine herum. Der Saugkopf umfasst vorteilhaft einen ersten Bereich des Luftkanals der Zubehörvorrichtung, durch den das Staubgut während des Betriebs vom Einsatzort der Handwerkzeugmaschine in die Staubsammelbox der Zubehörvorrichtung transportiert werden kann. Vorteilhaft wird ein Einsatzwerkzeug der Handwerkzeugmaschine während des Betriebs von dem Saugkopf zumindest teilweise, insbesondere vollständig, umschlossen, um möglichst sämtliches Staubgut in den Luftkanal zu führen.

Durch das Arbeiten mit der Zubehörvorrichtung kann das Staubaufnahmeelement des Saugkopfes mit der Zeit abgenutzt werden. Durch die lösbare Verbindbarkeit des Staubaufnahmeelements am Saugkopf kann das Staubaufnahmeelement vorteilhaft auf einfache Weise ersetzt werden. Des Weiteren kann das Staubaufnahmeelement für unterschiedliche Einsatzwerkzeuge wie beispielsweise Meißel, Bohrer oder Hohlbohrkronen ausgebildet sein. Durch das Wechseln auf ein auf das verwendete Einsatzwerkzeug angepasstes Staubaufnahmeelement kann die Zubehörvorrichtung vorteilhaft auf verschiedene Einsatzwerkzeuge angepasst werden. Vorteilhaft ist zwischen dem Staubaufnahmeelement und dem Adapterelement eine Dichtung angeordnet, die dazu ausgebildet ist, ein Verlassen von Staubpartikel an der Verbindungsfläche zwischen Staubaufnahmeelement und Adapterelement zu verhindern.

Es wird zudem beispielsweise ein System aus einer Zubehörvorrichtung vorgeschlagen, wie im vorigen Absatz beschreiben, und einem weiteren Staubaufnahmeelement. Es wird vorgeschlagen, dass das weitere Staubaufnahmeelement mit dem Adapterelement des Saugkopfes verbindbar ausgebildet ist und das weitere Staubaufnahmeelement eine Länge aufweist, die sich von einer Länge des Staubaufnahmeelements unterscheidet.

Vorteilhaft kann dadurch eine besonders kurze Bauweise der Zubehörvorrichtung realisiert werden, die zudem auf unterschiedlich lange Bauweisen der Handwerkzeugmaschine anpassbar ist. Insbesondere ist das Staubaufnahmeelement länger ausgebildet, als das weitere Staubaufnahmeelement. Durch eine im Wesentlichen zweiteilige Ausbildung des Saugkopfes durch ein Adapterelement und ein Staubaufnahmeelement kann der im Saugkopf angeordnete Bereich des Luftkanals vorteilhaft strömungstechnisch optimiert werden.

Des Weiteren wird beispielsweise eine Zubehörvorrichtung für eine Handwerkzeugmaschine beschrieben, insbesondere für eine Handwerkzeugmaschine mit einem Schlagwerk, mit einem Gehäuse, das verbindbar mit der Handwerkzeugmaschine ausgebildet ist, wobei die Zubehörvorrichtung zumindest einen Luftkanal aufweist, über den Werkstoffpartikel von einer Arbeitsstelle weg transportierbar sind. Es wird vorgeschlagen, dass die Zubehörvorrichtung eine Sensoreinheit aufweist, die dazu ausgebildet ist, eine Veränderung des Drucks und/oder Volumenstroms zu detektieren. Vorteilhaft können über die Messung des Drucks oder des Volumenstroms wichtige Betriebsparameter der Zubehörvorrichtung, wie beispielsweise der Füllstand der Staubsammelbox oder ein Verstopfen des Luftkanals, detektiert werden.

Weiterhin weist die Zubehörvorrichtung eine Lüftereinheit auf, die dazu ausgebildet ist, einen Luftstrom zum Transport von Staubgut zu erzeugen, wobei die Lüftereinheit einen Elektromotor umfasst, der dazu ausgebildet ist, ein Lüfterelement anzutreiben.

Zudem weist die Zubehörvorrichtung eine Staubsammelbox auf.

Des Weiteren ist die Sensoreinheit dazu ausgebildet, einen Betriebsparameter des Elektromotors, insbesondere eine Drehzahl des Elektromotors oder ein Antriebsstrom des Elektromotors, zu detektieren. Vorteilhaft kann über den Betriebsparameter des Elektromotors eine Kenngröße des Drucks und/oder des Volumenstrom auf einfache Weise erfasst werden. Wird der Luftkanal beispielhaft blockiert, wird durch das Lüfterelement weniger Luft bzw. Staubgut befördert. Durch den geringeren Druck wird einerseits die Drehzahl des Lüfterelements beziehungsweise die Drehzahl des Elektromotors, erhöht, und andererseits sinkt die Leistungsaufnahme des Elektromotors beziehungsweise der an dem Elektromotor anliegende Antriebsstrom. Der Betriebsparameter des Elektromotors kann insbesondere von einer Elektronik erfasst werden, die dazu ausgebildet ist, den Elektromotor der Zubehörvorrichtung zu regeln oder zu steuern. Die Elektronik kann beispielhaft als Elektronik der Zubehörvorrichtung oder als Elektronik der Handwerkzeugmaschine ausgebildet sein.

Weiterhin umfasst die Sensoreinheit zumindest ein Motorsensorelement, wobei das zumindest eine Motorsensorelement als ein induktiver Sensor, als ein Hall-Sensor, als ein oszillatorischer Sensor, als ein optischer Sensor oder als ein magnetoresistiver Sensor ausgebildet ist. Das Motorsensorelement ist insbesondere dazu ausgebildet, eine Kenngröße der Drehzahl des Elektromotors zu erfassen. Vorteilhaft ist das Motorsensorelement elektrisch verbindbar mit der Elektronik der Zubehörvorrichtung ausgebildet.

Des Weiteren ist die Sensoreinheit im Bereich des Luftstroms, insbesondere in Strömungsrichtung hinter einem Filterelement, vorzugsweise im Bereich eines Lüfterelements angeordnet. Vorteilhaft kann über eine derartige Anordnung der Sensoreinheit eine besonders genaue Erfassung des Drucks und/oder des Volumenstroms realisiert werden. Insbesondere kann durch eine Anordnung der Sensoreinheit hinter dem Filterelement sichergestellt werden, dass das Sensorelement nicht vom Staubgut beschädigt werden kann. Bei einer ausreichend geschützten Ausbildung der Sensoreinheit ist es ebenfalls denkbar, die Sensoreinheit in der Staubsammelbox oder im Luftkanal anzuordnen. Bevorzugt ist die Sensoreinheit in einer Aufnahmetasche für das Lüfterelement angeordnet, in welcher das Lüfterelement drehbar gelagert ist.

Zudem umfasst die Sensoreinheit zumindest ein mechanisches und/oder zumindest ein elektronisches Luftsensorelement. Vorteilhaft ist über das Luftsensorelement eine Kenngröße des Drucks und/oder des Volumenstroms erfassbar. Unter einem elektronischen Luftsensorelement soll insbesondere ein Luftsensorelement verstanden werden, dass die erfasste Kenngröße des Drucks und/oder des Volumenstroms in ein elektrisches Signal umwandelt, welches wiederum an eine Elektronik leitbar ist. Das elektronische Luftsensorelement kann als ein Durchflusssensor ausgebildet sein, wie beispielsweise ein Ultraschalldurchflusssensor oder ein magnetisch-induktiver Durchflusssensor. Es ist ebenfalls denkbar, dass das elektronische Luftsensorelement als Drucksensor ausgebildet ist. Unter einem mechanischen Luftsensorelement soll insbesondere ein Luftsensorelement verstanden werden, dass keine elektrischen Verbindungen aufweist.

Weiterhin umfasst die Zubehörvorrichtung eine Anzeigeeinheit, die dazu ausgebildet ist, eine Veränderung des Drucks und/oder des Volumenstroms anzuzeigen. Vorteilhaft kann mittels der Anzeigeeinheit der Füllstand kontinuierlich oder in diskreten Schritten bzw. Abständen angezeigt werden. Ebenfalls ist denkbar, dass über die Anzeigeeinheit ein Verstopfen des Luftkanals anzeigbar ist.

Des Weiteren weist die Anzeigeeinheit ein optisches Anzeigeelement, ein haptisches Anzeigeelement und/oder ein akustisches Anzeigeelement auf. Vorteilhaft kann durch das Anzeigeelement dem Benutzer der Zubehörvorrichtung ein Status der Zubehörvorrichtung signalisiert werden. Das optische Anzeigeelement kann beispielhaft als ein einfarbiges oder mehrfarbiges Leuchtelement, beispielsweise als eine LED, ausgebildet sein. Es ist ebenfalls denkbar, dass das optische Anzeigeelement als ein Bildschirmelement dargestellt ist, das Informationen über den Füllstand und/oder das Verstopfen des Luftkanals graphisch darstellt. Das haptische Anzeigeelement kann beispielhaft als ein Vibration generierendes Element, beispielsweise als kleiner Motor, ausgebildet sein, das insbesondere in einem Griffbereich der Zubehörvorrichtung angeordnet ist. Das akustische Anzeigeelement ist vorteilhaft als ein Lautsprecherelement ausgebildet. Die Anzeigeelemente können elektrisch mit dem Luftsensorelement und/oder der Elektronik der Zubehörvorrichtung verbunden sein. Vorzugsweise ist das Anzeigeelement über die Elektronik der Zubehörvorrichtung steuerbar ausgebildet. Zudem sind das mechanische Luftsensorelement und das optische Anzeigeelement miteinander gekoppelt. Insbesondere soll dabei eine mechanische Kopplung verstanden werden, sodass eine Bewegung des optischen Anzeigeelements durch eine Bewegung des mechanischen Luftsensorelements erzwungen wird.

Zudem wird beispielsweise eine Handwerkzeugmaschine mit einer Zubehörvorrichtung wie zuvor beschrieben.

Weiterhin sind die Sensoreinheit und/oder die Anzeigeeinheit in oder an der Handwerkzeugmaschine angeordnet. Vorteilhaft kann dadurch eine besonders effiziente Sensoreinheit bzw. Anzeigeeinheit realisiert werden. Insbesondere ist ein optisches Anzeigeelement der Anzeigeeinheit derart seitlich oder auf der Oberseite der Handwerkzeugmaschine angeordnet, dass ein Benutzer das Anzeigeelement während des Bearbeitens sehen kann. Des Weiteren ist es denkbar, dass ein haptisches Anzeigeelement vorteilhaft an einem Griffbereich der Handwerkzeugmaschine ausgebildet ist.

Des Weiteren ist die Anzeigeeinheit vorteilhaft extern ausgebildet ist. Unter einer externen Anzeigeeinheit soll insbesondere eine Anzeigeeinheit verstanden werden, die als eine separate Vorrichtung ausgebildet ist, und drahtlos Informationen/Steuersignale von der Sensoreinheit empfangen beziehungsweise austauschen kann. Bei der externen Anzeigeeinheit kann es sich beispielsweise um ein Smartphone handeln.

Des Weiteren wird vorgeschlagen, dass die Sensoreinheit eine Kommunikationsschnittstelle aufweist, die zur drahtlosen Übertragung von Informationen ausgebildet ist. Bevorzugt ist die Kommunikationsschnittstelle zur drahtlosen Übertragung von Informationen an ein Smartphone ausgebildet.

Zudem ist eine Antriebseinheit der Handwerkzeugmaschine in Abhängigkeit eines Signals, insbesondere eines Fehlersignals, der Sensoreinheit steuerbar, insbesondere abschaltbar. Insbesondere ist der Elektromotor in Abhängigkeit eines Signals der Sensoreinheit steuerbar. Bei Arbeiten mit gesundheitsschädlichen Werkstoffen, kann vorteilhaft der Elektromotor abgeschaltet werden, falls ein Schwellenwert des Füllstands der Staubsammelbox überschritten wird oder falls eine Verstopfung des Luftkanals ermittelt wurde.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer ersten Ausführungsform einer Zubehörvorrichtung befestigt an einer Handwerkzeugmaschine;
- Fig. 2: eine perspektivische Ansicht der Rückseite der Zubehörvorrichtung gemäß Fig. 1;
- Fig. 3: ein Längsschnitt der Zubehörvorrichtung gemäß Fig. 1;
- Fig. 4: eine perspektivische Ansicht einer Filtereinheit;
- Fig. 5: eine perspektivische Ansicht einer Staubsammelbox mit eingesetzter Filtereinheit;
- Fig. 6: eine perspektivische Teilansicht einer Innenseite einer Gehäusehalbschale der Staubsammelbox nach Fig. 1 mit eingesetztem Elektromotor;
- Fig. 7: einen Schnitt durch Fig. 6 entlang der Ebene A;
- Fig. 8: eine perspektivische Teilansicht einer Innenseite der Gehäusehalbschale der Staubsammelbox nach Fig. 1;
- Fig. 9: eine perspektivische Ansicht eines Saugkopfes für die Zubehörvorrichtung nach Fig. 1;
- Fig. 10: ein Längsschnitt einer alternativen Ausführungsform des Saugkopfs;
- Fig. 11: eine Teilansicht eines Schnitts durch die in Fig. 1 eingezeichnete Ebene B;
- Fig. 12: eine erste alternative Ausführungsform der Zubehörvorrichtung;
- Fig. 13: eine zweite alternative Ausführungsform der Zubehörvorrichtung mit einem alternativen Sicherungselement;
- Fig. 14: ein Längsschnitt einer dritten alternative Ausführungsform der Zubehörvorrichtung mit einer Sensoreinheit;
- Fig. 15: ein Längsschnitt einer vierten alternativen Ausführungsform der Zubehörvorrichtung;
- Fig. 16 a-c: ein Längsschnitt einer Sensoreinheit für eine Zubehörvorrichtung gemäß Fig. 15 in verschiedenen Zuständen.

### Beschreibung der Ausführungsbeispiele

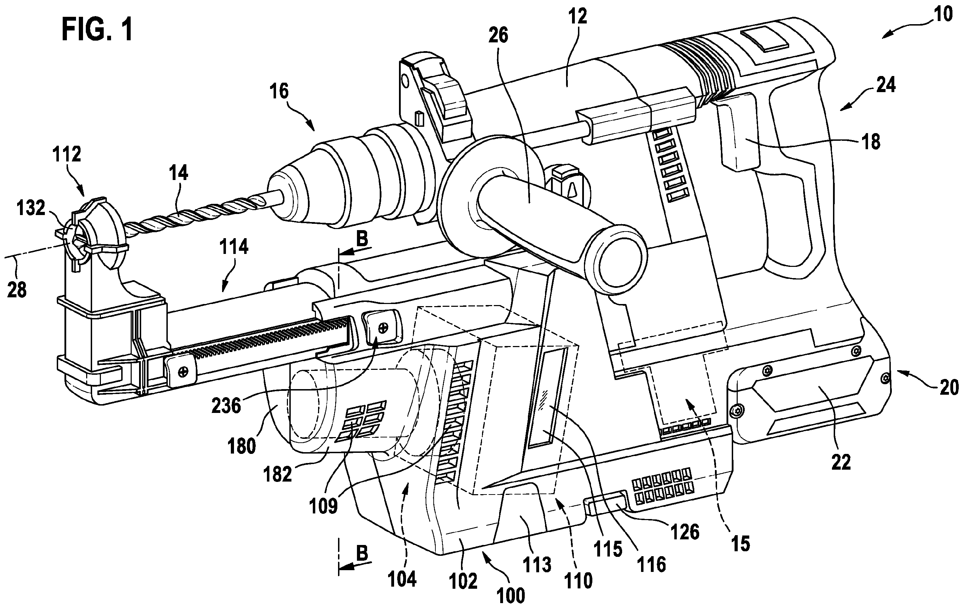

In Fig. 1 ist eine perspektivische Ansicht einer ersten Ausführungsform einer mit einer Handwerkzeugmaschine 10 lösbar verbundenen Zubehörvorrichtung 100 gezeigt. Die Handwerkzeugmaschine 10 weist ein Gehäuse 12 auf, das insbesondere als ein Außengehäuse ausgebildet ist. Die Handwerkzeugmaschine 10 ist beispielhaft als ein Bohrhammer ausgebildet. Die Handwerkzeugmaschine 10 weist eine Antriebseinheit (nicht dargestellt) auf, die über eine Getriebeeinheit (nicht dargestellt) dazu ausgebildet ist, ein Einsatzwerkzeug 14 rotierend und/oder schlagend anzutreiben. Hierzu weist die Antriebseinheit der Handwerkzeugmaschine 10 einen Elektromotor 15 auf, dessen Rotationsachse im Wesentlichen senkrecht zu der Arbeitsachse 28 der Handwerkzeugmaschine 10 angeordnet ist. Die Antriebseinheit weist insbesondere ein Schlagwerk auf. Das Einsatzwerkzeug 14 wird über eine Werkzeugaufnahme 16 von der Handwerkzeugmaschine 10 aufgenommen. Die Werkzeugaufnahme 16 ist beispielhaft als ein austauschbares Wechselbohrfutter ausgebildet. Es ist allerdings auch denkbar, dass die Werkzeugaufnahme 16 als ein nicht austauschbares Festbohrfutter ausgebildet sein kann. Die Handwerkzeugmaschine 10 weist einen Betriebsschalter 18 auf, wobei über eine Betätigung des Betriebsschalters 18 die Handwerkzeugmaschine 10 ein- oder ausgeschaltet werden kann. Die Handwerkzeugmaschine 10 weist eine Energieversorgungseinheit 20 auf, die dazu ausgebildet ist, die Handwerkzeugmaschine 10 mit Energie zu versorgen. Die Energieversorgungseinheit 20 umfasst einen Handwerkzeugmaschinenakkupack 22, der lösbar mit dem Gehäuse 12 der Handwerkzeugmaschine 10 verbunden ist. Das Gehäuse 12 weist einen Griffbereich 24 auf, an dem der Betriebsschalter 18 angeordnet ist. Um einen sicheren Griff der Handwerkzeugmaschine 10 zu gewährleisten, weist die Handwerkzeugmaschine 10 einen Zusatzhandgriff 26 auf, der an dem Gehäuse 12 lösbar verbunden ist.

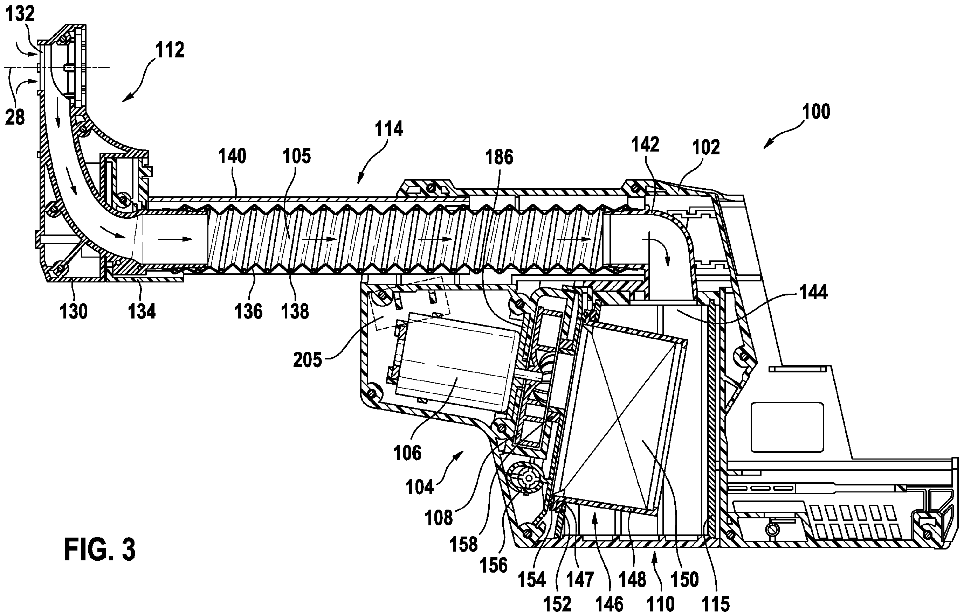

Die Zubehörvorrichtung 100 weist ein Gehäuse 102 auf, das lösbar mit der Handwerkzeugmaschine 10 verbunden ist. In dem Gehäuse 102 der Zubehörvorrichtung 100 ist eine Lüftereinheit 104 angeordnet. Die Lüftereinheit 104 umfasst eine Antriebseinheit, die als Elektromotor 106 ausgebildet ist, und ein Lüfterelement 108, das drehbar im Gehäuse 102 gelagert ist (siehe Fig. 3). In dem Bereich der Lüftereinheit 104, insbesondere im Bereich des Elektromotors 106 und im Bereich des Lüfterelements 108, sind Luftdurchlassöffnungen 109 angeordnet, durch die Luft in das Gehäuse 102 ein- und/oder austreten kann. Während des Betriebs der Zubehörvorrichtung 100 ist die Lüftereinheit 104 dazu ausgebildet, einen Luftstrom zu erzeugen, der Staubgut vom Einsatzort des Einsatzwerkzeugs 14 über einen Luftkanal 105 in eine Staubsammelbox 110 transportiert (siehe Fig. 3). Während des Betriebs der Zubehörvorrichtung 100 tritt der Luftstrom (mittels Pfeilen eingezeichnet) über einen Saugkopf 112 in die Zubehörvorrichtung 100 ein. Der Abstand des Saugkopfes 112 von der Handwerkzeugmaschine 10, insbesondere von der Werkzeugaufnahme 16 der Handwerkzeugmaschine 10, ist über eine Teleskopeinheit 114, die der Zubehörvorrichtung 100 zugeordnet ist, variabel einstellbar ausgebildet. Die Staubsammelbox 110 ist mittels einer ersten Befestigungseinheit 113 lösbar mit der Zubehörvorrichtung 100 verbunden. Die Verbindung der Staubsammelbox 110 mit der Zubehörvorrichtung 100 erfolgt insbesondere über ein Einschieben der Staubsammelbox 110 in die Zubehörvorrichtung 100, wobei das Einschieben im Wesentlichen senkrecht zu der Arbeitsachse 28 der Handwerkzeugmaschine 10 erfolgt. Die Staubsammelbox 110 umfasst ein transparentes Gehäuse 115. Eine längliche Ausnehmung 116 im Gehäuse 102 der Zubehörvorrichtung 100 ist vorteilhaft derart angeordnet, dass durch diese Ausnehmung 116 der Füllstand der Staubsammelbox 110 mit Staubgut optisch erkennbar ist.

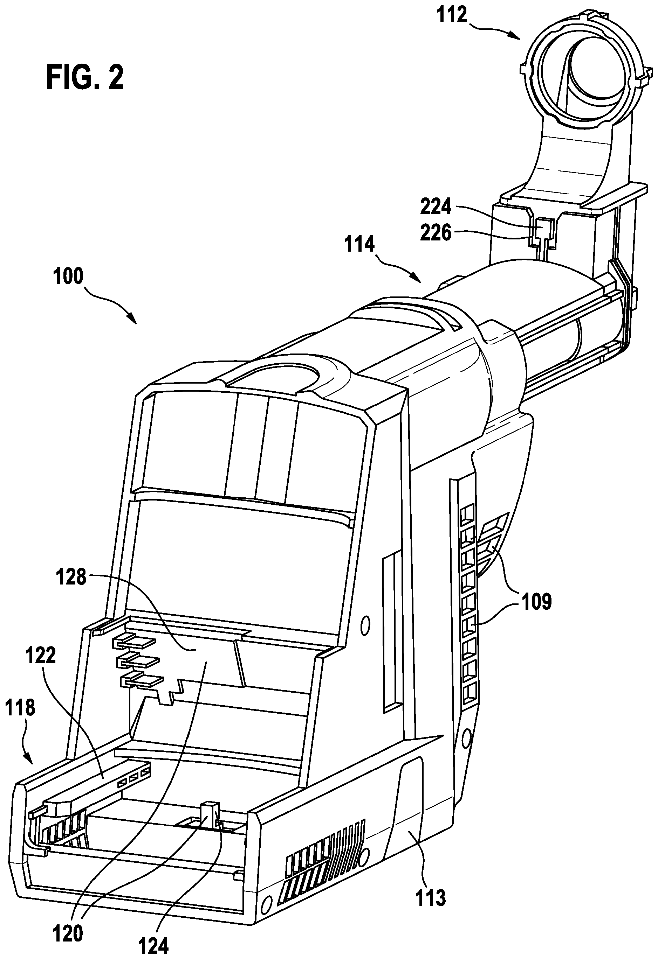

In Fig. 2 ist in einer perspektivischen Ansicht die Rückseite der Zubehörvorrichtung 100 gemäß Fig. 1 gezeigt. Auf der Rückseite der Zubehörvorrichtung 100 ist der Kopplungsbereich 118 angeordnet, der sowohl mechanische als auch elektrische Schnittstellenelemente 120 umfasst. Zur mechanischen Verbindung der Zubehörvorrichtung 100 mit der Handwerkzeugmaschine 10 wird die Zubehörvorrichtung 100 entlang Führungsschienen 122, die parallel zu der Arbeitsachse 28 angeordnet sind, auf das Gehäuse 12 der Handwerkzeugmaschine 10 geschoben. In der Endposition der Zubehörvorrichtung 100 an der Handwerkzeugmaschine 10 rastet ein federbeaufschlagtes Formschlusselement 124 der Zubehörvorrichtung 100 in ein korrespondierendes Hinterschnittelement (nicht dargestellt) am Gehäuse 12 der Handwerkzeugmaschine 10 ein. Durch die Führungsschienen 122 und das Formschlusselement 124 ist die Zubehörvorrichtung 100 verliersicher mit der Handwerkzeugmaschine 10 verbindbar ausgebildet. Die Verbindung kann über eine Betätigung eines Verbindungselements 126 (siehe Fig. 1) gelöst werden, wobei eine Betätigung des Verbindungselements 126 eine Verschiebung des Formschlusselements 124 entgegen der Federkraft bewirkt. Des Weiteren umfasst der Kopplungsbereich 118 eine elektrische Schnittstelle 128, die drei elektrische Kontakte umfasst, welche über eine Verbindung mit einer nicht dargestellten elektrischen Schnittstelle an der Handwerkzeugmaschine 10 dazu ausgebildet ist, die Zubehörvorrichtung 100 elektrisch mit der Handwerkzeugmaschine 10 zu verbinden. Über die elektrische Schnittstelle 128 kann die Lüftereinheit 104 durch die Energieversorgungseinheit 20 der Handwerkzeugmaschine 10 mit Energie versorgt werden. Zusätzlich kann die Lüftereinheit 104 über die elektrische Schnittstelle 128 mit einer Steuerelektronik 15 der Handwerkzeugmaschine 10, insbesondere den Betriebsschalter 18 der Handwerkzeugmaschine 10, elektrisch verbunden werden, so dass eine Betätigung des Betriebsschalters 18 die Lüftereinheit 104, beziehungsweise die Zubehörvorrichtung 100, aktiviert.

In Fig. 3 ist ein Längsschnitt der Zubehörvorrichtung 100 gemäß Fig. 1 gezeigt. Der Saugkopf 112 umfasst ein Staubaufnahmeelement 130, das eine Öffnung 132 aufweist, die konzentrisch um die Arbeitsachse 28 der Handwerkzeugmaschine 10 angeordnet ist. Das Staubaufnahmeelement 130 ist lösbar mit einem Adapterelement 134 verbunden, das ebenfalls dem Saugkopf 112 zugeordnet und an der Teleskopeinheit 114 befestigt ist. Der Saugkopf 112 ist als erster Abschnitt des Luftkanals 105 ausgebildet. Der zweite Abschnitt des Luftkanals 105 wird von einem elastischen Schlauchelement 136 gebildet, in dem eine metallische Federspirale 138 eingearbeitet ist. Das Schlauchelement 136 ist radial in einem Teleskopelement 140 der Teleskopeinheit 114 gelagert, wobei das Teleskopelement 140 axial beweglich im Gehäuse 102 der Zubehörvorrichtung 100 gelagert ist. An einem ersten Ende umschließt das Schlauchelement 136 das Adapterelement 134. An einem zweiten Ende umschließt das Schlauchelement 136 ein Rohrkrümmerelement 142, das einen dritten und letzten Abschnitt des Luftkanals 105 bildet. In Strömungsrichtung hinter dem Rohrkrümmerelement 142 ist eine Eingangsöffnung 144 der Staubsammelbox 110 angeordnet. Die Staubsammelbox 110 weist eine Filtereinheit 146 auf, die dazu ausgebildet ist, Staubpartikel aus dem Luftstrom zu filtern. Die Filtereinheit 146 umfasst ein Rahmenelement 148, an dem ein Filterelement 150 befestigt ist. Das Filterelement 150 ist beispielhaft als ein Faltenfilter ausgebildet. Die Filtereinheit 146 ist lösbar mit der Staubsammelbox 110 verbunden. Insbesondere ist die Filtereinheit 146 an einer Ausgangsöffnung 147 der Staubsammelbox 110 angeordnet, über die der Luftstrom die Staubsammelbox 110 verlässt. Um zu verhindern, dass Staubgut am Filterelement 150 vorbei die Staubsammelbox 110 verlässt, weist die Staubsammelbox 110 ein erstes Dichtelement 152 und ein zweites Dichtelement 154 auf. Das erste Dichtelement 152 ist staubsammelboxseitig an der Filtereinheit 146 angeordnet. Das zweite Dichtelement 154 ist zubehörvorrichtungsseitig an der Filtereinheit 146 angeordnet. Insbesondere beaufschlagt das erste Dichtelement 152 auf zumindest einer Seite die Staubsammelbox 110 und das zweite Dichtelement 154 auf zumindest einer Seite das Gehäuse 102 der Zubehörvorrichtung 100. Um die Staubsammelbox 110 auf der Seite der Ausgangsöffnung 147 zusätzlich abzudichten, beaufschlagt die Staubsammelbox 110, insbesondere das zweite Dichtmittel 154 der Staubsammelbox 110, das Gehäuse 102 der Zubehörvorrichtung 100 über ein mit Spiel gelagertes Gehäuseelement 156. Das Gehäuseelement 156 ist dem Gehäuse 102 der Zubehörvorrichtung 100 zugeordnet und beweglich im Gehäuse 102 gelagert. Zwischen dem Gehäuseelement 156 und dem Gehäuse 102 ist zusätzlich ein elastisches Toleranzausgleichselement 158 angeordnet, das beispielhaft als ein Gummiring ausgebildet ist und sich beim Verbinden der Staubsammelbox 110 mit der Zubehörvorrichtung 100 verformen lässt.

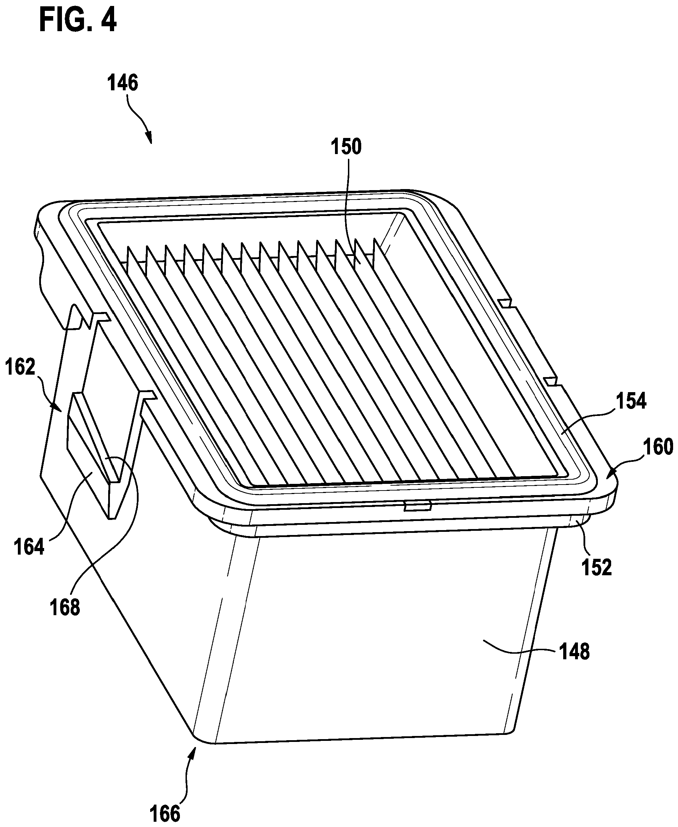

In Fig. 4 ist eine perspektivische Ansicht der Filtereinheit 146 der Staubsammelbox 110 gezeigt. Das Rahmenelement 148 umschließt das Filterelement 150 seitlich vollständig. Das Rahmenelement 148 ist an seiner Oberkante 160 senkrecht nach außen gebogen. Das erste Dichtelement 152 und das zweite Dichtelement 154 sind an dieser nach außen gebogenen Oberkante 160 auf gegenüberliegenden Seitenflächen, insbesondere umlaufend, angeordnet. Die Filtereinheit 146 wird mittels einer zweiten Befestigungseinheit 162 mit der Staubsammelbox 110 lösbar verbunden. Die zweite Befestigungseinheit 162 weist zwei gegenüberliegende Betätigungselemente 164 auf, die vorteilhaft mittig an der Oberkante 160 des Rahmenelements 148 angeformt sind. Die Betätigungselemente 164 der zweiten Befestigungseinheit 162 erstrecken sich in Richtung einer Unterkante 166 des Rahmenelements 148 und weisen jeweils ein Hinterschnittelement 168 auf.

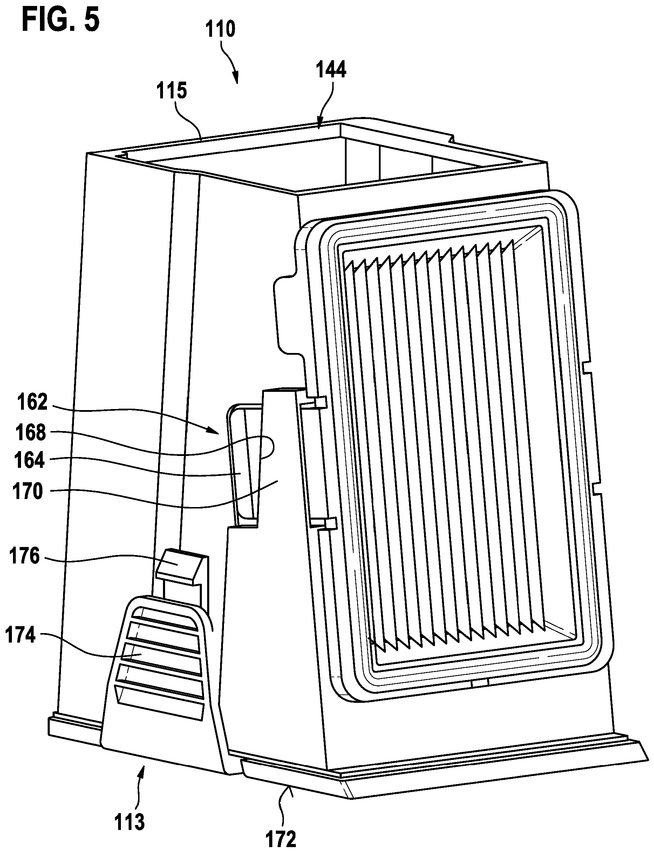

In Fig. 5 ist eine perspektivische Ansicht der Staubsammelbox 110 mit eingesetzter Filtereinheit 146 gezeigt. Das Gehäuse 115 der Staubsammelbox 110 weist zwei gegenüberliegende Taschen 170 auf, die der zweiten Befestigungseinheit 162 zugeordnet sind. Zum Verbinden der Filtereinheit 146 mit dem Gehäuse 115 der Staubsammelbox 110 werden die Betätigungselemente 164 in die Taschen 170 eingeführt, dabei verbiegen sich die Betätigungselemente 164 zunächst nach innen, bis die Hinterschnittelemente 168 in Eingriff mit dem hinteren Ende der Tasche 170 gelangen und sich die Betätigungselemente 164 entspannen. Die Filtereinheit 146 ist somit kraft- und formschlüssig mit dem Gehäuse 115 der Staubsammelbox 110 verbunden. Durch einen Druck auf die Betätigungselemente 164 nach innen kann der Hinterschnitt wieder gelöst werden.

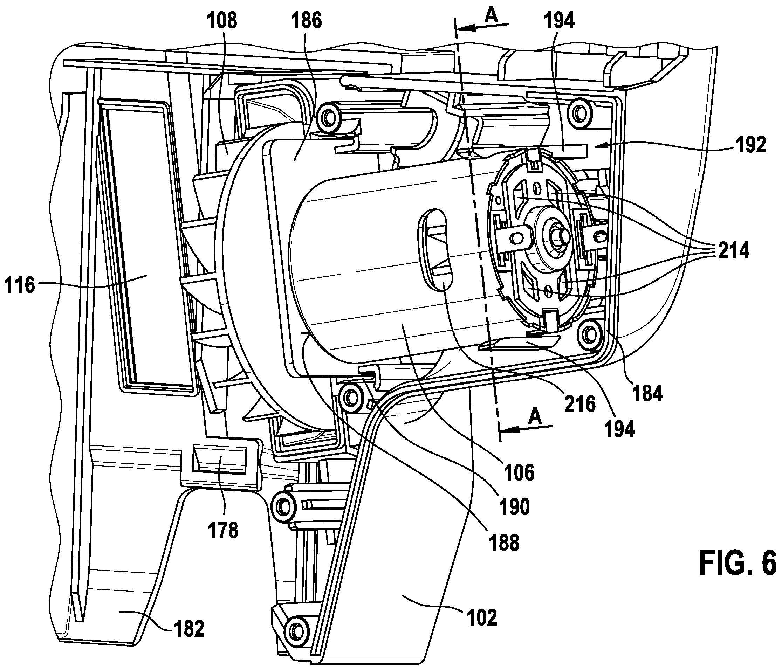

Die Staubsammelbox 110 weist eine Standfläche 172 auf, die mit dem Gehäuse 115 der Staubsammelbox verschraubt ist. An der Standfläche 172 angeformt sind zwei gegenüberliegende federnde Betätigungselemente 174, die der ersten Befestigungseinheit 113 zugeordnet sind. Die Betätigungselemente 174 erstrecken sich im Wesentlichen parallel zum Gehäuse 115 und enden in einer Rastnase 176. Zur kraft- und formschlüssigen Verbindung der Staubsammelbox 110 mit der Zubehörvorrichtung 100, rasten die Rastnasen 176 der ersten Befestigungseinheit 113 in korrespondierende Taschen 178 (siehe Fig. 6) an der Innenseite des Gehäuses 102 der Zubehörvorrichtung 100 ein. Das Gehäuse 102 der Zubehörvorrichtung 100 ist gemäß Fig. 1 aus einer ersten Gehäusehalbschale 180 und einer zweiten Gehäusehalbschale 182 zusammengesetzt. Bei der Montage werden die beiden Gehäusehalbschalen 180, 182 mittels Schraubverbindungen entlang einer Verbindungsebene, die durch die Randkanten 184 der Gehäusehalbschalen 180, 182 verläuft, miteinander verbunden.

In Fig. 6 ist die zweite Gehäusehalbschale 182 mit eingesetztem Elektromotor 106 gezeigt. Der Elektromotor 106 ist über eine Schraubverbindung an einem Aufnahmeflansch 186 befestigt. Der Aufnahmeflansch 186 ist als ebene Metallplatte ausgebildet. Die Befestigung des Elektromotors 106 an dem Aufnahmeflansch 186 erfolgt an einem ersten stirnseitigen Ende 188 des Elektromotors 106. In der zweiten Gehäusehalbschale 182 ist eine Aufnahmetasche 190 ausgebildet, in die der mit dem Elektromotor 106 verbundene Aufnahmeflansch 186 einsetzbar ist. Da der Elektromotor 106 nur an einem Ende, und zwar dem ersten stirnseitigen Ende 188 des Elektromotors 106, im Gehäuse 102 gehalten ist, wird die Lagerung des Elektromotors 106 in diesem Bereich während des Betriebs des Elektromotors 106 durch auftretende Vibrationen stark belastet. Um die durch den Elektromotor 106 oder durch den Schlagbetrieb der Handwerkzeugmaschine 10 verursachten Vibrationen zu dämpfen, weist die Zubehörvorrichtung 100 eine Dämpfungseinheit 192 auf. Die Dämpfungseinheit 192 umfasst beispielhaft zwei Dämpfungselemente 194, die an der Innenseite der zweiten Gehäusehalbschale 182 angeordnet, insbesondere angeformt, sind. Die Dämpfungselemente 194 sind als Federbalkenelemente ausgebildet.

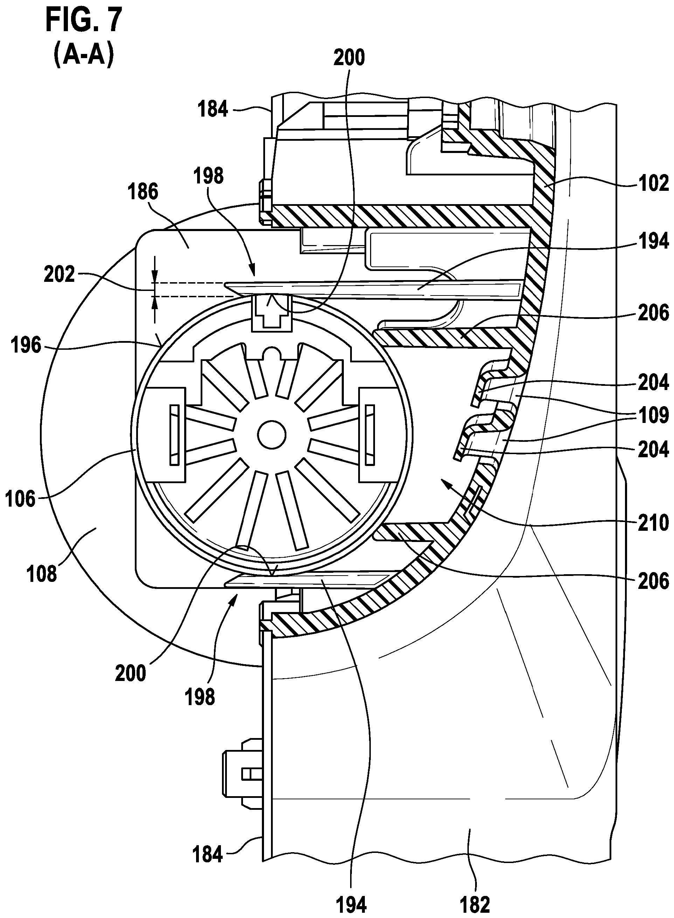

In Fig. 7 ist ein Schnitt durch die die in der Fig. 6 eingezeichneten Ebene A gezeigt. Die Dämpfungselemente 194 erstrecken sich in gerader Richtung von der Innenseite der Gehäusehalbschale 182 weg und an der Verbindungsebene der Gehäusehalbschalen 180, 182 vorbei. Die Dämpfungselemente 194, die einteilig mit der zweiten Gehäusehalbschale 182 ausgebildet sind, erstrecken sich somit teilweise in den von der ersten Gehäusehalbschale 180 umschlossenen Raum. Die Dämpfungselemente 194 liegen an der äußeren Umfangsfläche 196 des Elektromotors 106 an. Die Dämpfungselemente 194 sind vorteilhaft derart angeordnet, dass sie im an dem Elektromotor 106 anliegenden Zustand diesen beidseitig radial mit einer Kraft beaufschlagen. Dies wird dadurch realisiert, dass der Abstand der beiden Dämpfungselemente 194, insbesondere an ihrem freien Ende 198, geringer ist, als der Durchmesser des Elektromotors 106. Um das Einsetzen des Elektromotors 106 zwischen den beiden Dämpfungselementen 194 zu erleichtern, sind die Dämpfungselemente 194 an ihrem freien Ende 198 nach innen abgerundet. Auf diese Weise können sich die beiden Dämpfungselemente 194 beim Einsetzen voneinander wegbiegen. Die Dämpfungselemente 194 sind oberhalb und unterhalb des Elektromotors 106 angeordnet, sodass die Dämpfungseinheit 192 während des Betriebs entlang der Schwerkraft wirkt. Seitlich wird der Elektromotor 106 durch das Gehäuse 102 der Zubehörvorrichtung 100 abgestützt. Das Maß der Dämpfung durch die Dämpfungseinheit 192 ist über diverse Parameter, wie die Anzahl der Dämpfungselemente 194, die Positionierung der Dämpfungselemente 194, der Steifigkeit der Dämpfungselemente 194 und/oder der Beschaffenheit einer Kontaktfläche 200 der Dämpfungselemente 194, einstellbar. Die Steifigkeit der Dämpfungselemente 194 ergibt sich dabei insbesondere durch den Abstand des Ursprungs der Dämpfungselemente 194 an der Innenseite des Gehäuses 102 von der Kontaktfläche 200 sowie der Dicke 202 der Dämpfungselemente 194. Die Beschaffenheit der Kontaktfläche 200 der Dämpfungselemente 194 kann beispielsweise durch eine Veränderung der Rauigkeit der Kontaktfläche 200 durch beispielweise eine mechanische oder chemische Oberflächenbehandlung oder durch ein Beschichten der Oberfläche realisiert werden. Im Bereich der Kontaktfläche 200 liegt das Dämpfungselement am Elektromotor 106 an.

Bei Arbeiten mit der Handwerkzeugmaschine 10 können aus der Bearbeitungsoberfläche Staubpartikel unterschiedlicher Größe von wenigen µm- bis in den mm-Bereich gelöst werden. Um ein Eindringen großer Staubpartikel über die Luftdurchlassöffnungen 109 in das Gehäuse 102 der Zubehörvorrichtung 100 zu verhindern, weist die Zubehörvorrichtung 100 Luftleitelemente 204 auf, die ein direktes Eindringen von großen Staubpartikeln in das Gehäuse 102 unterbinden. Die Luftleitelemente 204 sind als Gehäuserippen an dem Gehäuse 102 der Zubehörvorrichtung nach innen hin angeformt. Die Luftleitelemente 204 sind derart im Bereich der Luftdurchlassöffnungen 109 angeordnet, dass die eintretende Luft bzw. Staubpartikel in ihrer Flugbahn umgelenkt werden. In dem gezeigten Ausführungsbeispiel werden durch die Luftleitelemente 204 beispielhaft sämtlich senkrecht von außen in Richtung des Elektromotors 106 sich bewegenden Staubpartikel um ca. 90° nach unten hin abgelenkt. Größere Staubpartikel prallen dabei gegen das Luftleitelement 204 und verlieren einen Großteil ihrer kinetischen Energie, wodurch eine mögliche Beschädigung des Elektromotors 106 oder einer Elektronik 205 der Zubehörvorrichtung 100 verhindert werden kann.

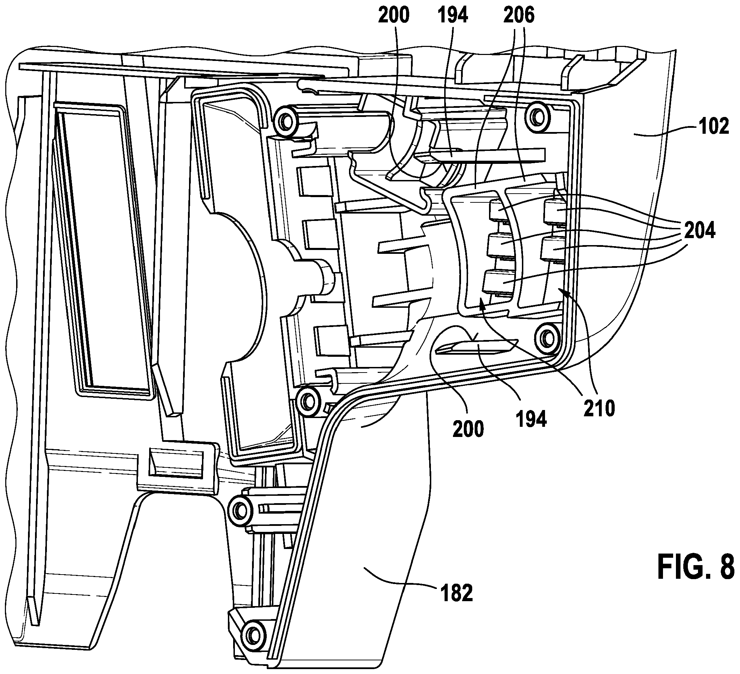

In Fig. 8 ist eine perspektivische Teilansicht der Innenseite der zweiten Gehäusehalbschale 182 gezeigt. Die Luftleitelemente 204 sind im Bereich der Luftdurchlassöffnungen 109 nach innen hin gewölbt ausgebildet (siehe Fig. 8). Ein Bereich an der Innenseite der Gehäusehalbschale 182, der die Luftleitelemente 204 umfasst, wird von einem den Elektromotor 106 insbesondere seitlich abstützenden Stützelement 206 gebildet. Drei Luftleitelemente 204 werden von dem Stützelement 206 um 360° umschlossen; zwei Luftleitelemente 204 werden von dem Stützelement 206 um ca. 210° umschlossen. Dadurch, dass die Stützelemente 206 die Luftleitelemente 204 um zumindest 180° umschließen, werden durch die Stützelemente 206 Filteraufnahmetaschen 210 gebildet, in die ein nicht dargestelltes Filterelement einsetzbar ist. Das Filterelement kann aus einem Filterschaum ausgebildet sein, wie zum Beispiel Ether- oder Esterschaum. Vorteilhaft ist der Filterschaum aus einem retikulierten Polyurethanschaum ausgebildet. Weiterhin vorteilhaft weist der Filterschaum eine Porengröße von 10 ppi bis 90 ppi auf. Vorteilhaft sind die Luftleitelemente 204 und die Stützelemente 206 einteilig mit dem Gehäuse 102 ausgebildet, was eine besonders kostengünstige Herstellung der Zubehörvorrichtung 100 ermöglicht.

Der Elektromotor 106 weist zumindest einen Lufteinlass 214 und zumindest einen Luftauslass 216 auf (siehe Fig. 6). Der Lufteinlass 214 ist gegenüber dem stirnseitigen Ende 188 des Elektromotors 106 angeordnet, während die Luftauslässe 216 seitlich angeordnet sind. Um zu verhindern, dass der Elektromotor 106 seine warme Abluft direkt wieder einsaugt, sind die Luftdurchlassöffnungen 109 im Bereich der Luftauslässe 216 angeordnet. Insbesondere schneidet eine Gerade, die senkrecht von einer Rotationsachse des Elektromotors 106 ausgeht, zunächst den Luftauslass 216, dann das Filterelement, das Luftleitelement 204 und zuletzt die Luftdurchgangsöffnung 109. Insbesondere umschließt das Stützelement 206 die Luftdurchlassöffnungen 109 und den Luftauslass 216 derart, dass ein geschlossener Abluftkanal gebildet wird.

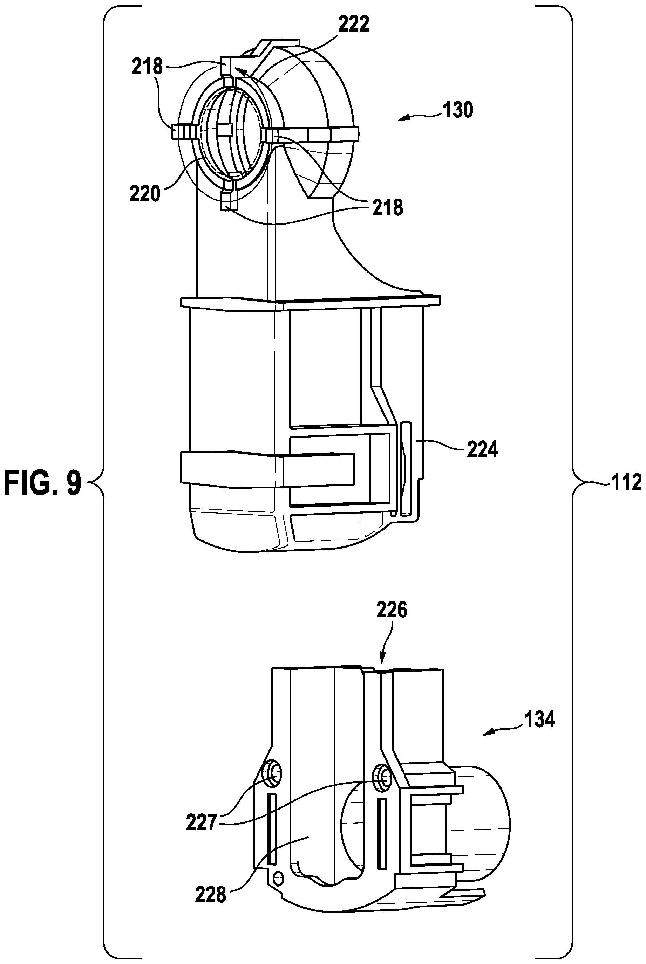

In Fig. 9 ist in einer perspektivischen Ansicht der Saugkopf 112 der Zubehörvorrichtung 100 gezeigt, wobei das Staubaufnahmeelement 130 gelöst vom Adapterelement 134 dargestellt ist. Während des Betriebs der Zubehörvorrichtung 100 liegt das Staubaufnahmeelement 130 an der Bearbeitungsfläche an. Um eine effektive Luftzufuhr zum Abtransport des Staubguts bereitzustellen, wird das Staubaufnahmeelement 130 über Anlageflächen 218 an der zu bearbeitenden Fläche angelegt, wobei die Anlageflächen 218 um einen Arbeitsbereich 220 herum angeordnet sind, in welchem das Einsatzwerkzeug 14 die Bearbeitungsfläche bearbeitet. Der Saugkopf 112 umfasst beispielhaft vier Anlageflächen 218, die sich in Richtung der Bearbeitungsoberfläche erstrecken. Vorteilhaft sind die Anlageflächen 218 auf einer Kreisbahn 222 um den Arbeitsbereich 220 herum angeordnet, wobei die Mittelpunkte der Anlageflächen 218 jeweils um ca. 90° voneinander beabstandet sind. Entlang der um den Arbeitsbereich 220 umlaufenden Kreisbahn 222 beaufschlagen die Anlageflächen 218 die zu bearbeitende Oberfläche insbesondere entlang höchstens 50% der Kreisbahn 222, vorteilhaft höchstens 30% der Kreisbahn 222 und besonders bevorzugt höchstens 15% der Kreisbahn 222. Durch den Kontakt der Anlageflächen 218 mit der Bearbeitungsoberfläche bildet sich zumindest ein Spalt zwischen der Bearbeitungsfläche und dem Staubaufnahmeelement 130. Vorteilhaft kann durch diese Spalte viel Luft von der Zubehörvorrichtung 100 eingesogen werden, was die Effektivität einer Entfernung von Staubgut am Einsatzort des Einsatzwerkzeugs 14 deutlich erhöht. Die Anlageflächen 218 sind vorteilhaft aus einem unnachgiebigen Werkstoff, insbesondere einem unnachgiebigen Kunststoff, ausgebildet.

Das Staubaufnahmeelement 130 ist durch ein Einschieben in das Adapterelement 134 verbindbar mit diesem ausgebildet (vgl. Fig. 3). Das Einschieben erfolgt von oben beziehungsweise senkrecht der axialen Bewegung der Teleskopeinheit 114. Die Verbindung erfolgt dabei insbesondere kraft- und formschlüssig durch korrespondierende Verbindungselemente 224, 226, beispielhaft durch eine Schnappverbindung. Vorteilhaft ist das Verbindungselement 224 des Staubaufnahmeelements 130 als ein Formschlusselement ausgebildet, dass in das Verbindungselement 226 des Adapterelements 134 eingreift, welches als eine korrespondierende Ausnehmung in einer Wand des Adapterelements 134 ausgebildet ist. Um ein schnelles Lösen der Verbindung zu ermöglichen, ragt das Verbindungselement 224 des Staubaufnahmeelements 130 über die Wand des Adapterelements 134 hinaus (zu sehen in Fig. 2). Das Adapterelement 134 wird mittels Schrauben, die in Schraubdomen 227 geführt sind, an der Zubehörvorrichtung 100 befestigt. Im unverbundenen Zustand kann der Luftkanal 105 der Zubehörvorrichtung 100 vorteilhaft einfach über das bearbeitungsflächenseitige, teilweise offene Ende 228 des Adapterelements 134 in gerader Linie begutachtet sowie gereinigt werden.

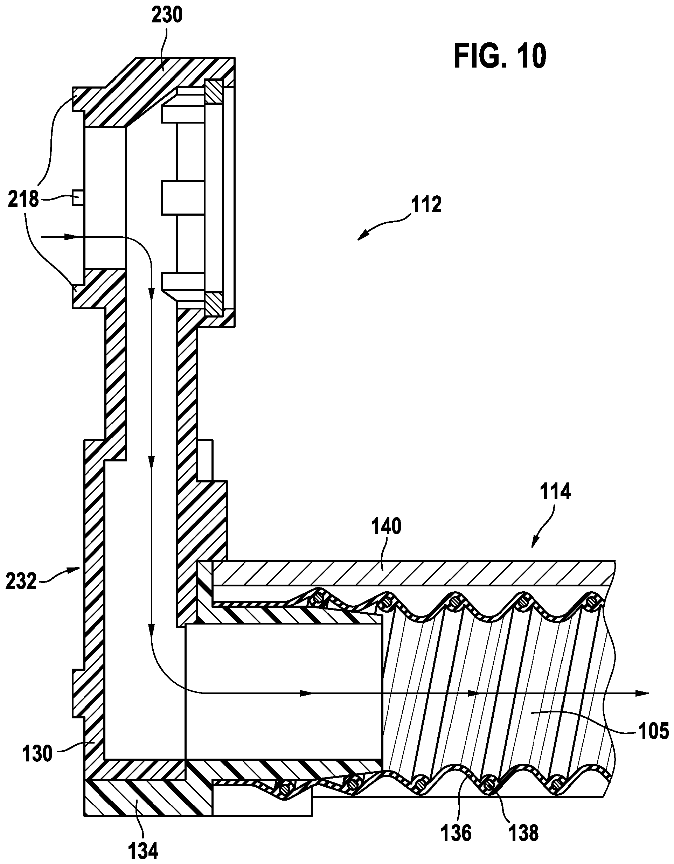

In Fig. 10 ist in einem Längsschnitt eine alternative Ausführungsform des Saugkopfes 112 gezeigt. Das Adapterelement 134 weist dabei den gleichen Aufbau wie im vorigen Ausführungsbeispiel auf und ist mit einem weiteren Staubaufnahmeelement 230 lösbar verbunden. Das weitere Staubaufnahmeelement 230 unterscheidet sich zum Staubaufnahmeelement 130 in seiner Länge. Wie in Fig. 10 zu sehen ist, schließt am stirnseitigen Ende 232 des Saugkopfes 112 das weitere Staubaufnahmeelement 230 im Wesentlichen bündig mit dem Adapterelement 134 ab. Lediglich die Anlageflächen 218 des weiteren Staubaufnahmeelements 230 stehen nach vorne hin ab. Durch das weitere Staubaufnahmeelement 230 wird somit die Länge der Zubehörvorrichtung 100 nicht Wesentlich verändert. Im Gegensatz dazu wird durch das Staubaufnahmeelement 130, wie in Fig. 3 zu sehen, die Länge der Zubehörvorrichtung 100 deutlich verlängert. Somit ist durch ein Wechseln der Staubaufnahmeelemente 130, 230 der axiale Abstand zwischen dem stirnseitigen Ende 232 des Saugkopfes 112 und der Werkzeugaufnahme 16 der Handwerkzeugmaschine 10 veränderbar. Dies kann beispielsweise dazu genutzt werden, um stets den gesamten axialen Bewegungsspielraum der Teleskopeinheit 114 ausnutzen zu können. Wird beispielsweise die Handwerkzeugmaschine 10 mit der als Wechselbohrfutter ausgebildeten Werkzeugaufnahme 16 durch eine Handwerkzeugmaschine mit Festbohrfutter ausgewechselt, so kann die dadurch reduzierte Länge der Handwerkzeugmaschine durch das weitere Staubaufnahmeelement 230 kompensiert werden. Aufgrund der kurzen Länge wird die Luft innerhalb des weiteren Staubaufnahmeelements 230 im Wesentlichen geradlinig geführt. Vorteilhaft kann im Staubaufnahmeelement 130, das länger ausgebildet ist, die Luft auf einer im Wesentlichen kreisbogenartigen oder elliptischen Bahn geführt werden, wodurch der Saugkopf strömungstechnisch optimierbar ist.

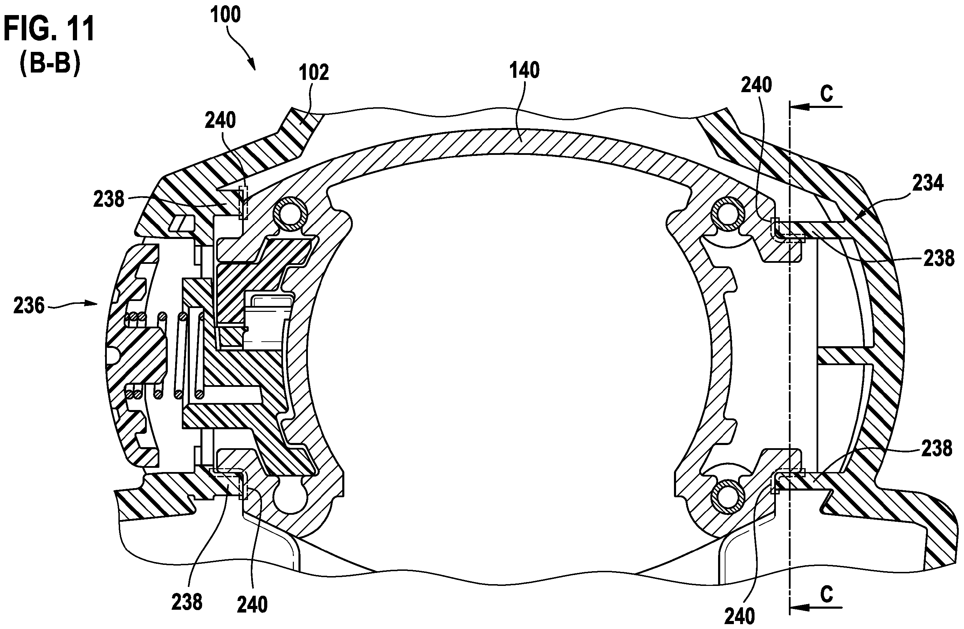

In Fig. 11 ist in einer Teilansicht ein Schnitt durch die in Fig. 1 eingezeichnete Ebene B gezeigt. Der Schnitt zeigt eine Gehäuseführung 234 für die Teleskopeinheit 114, in der insbesondere das Teleskopelement 140 der Teleskopeinheit 114 axial beweglich im Gehäuse 102 gelagert ist. Des Weiteren ist auch ein Teil eines Betätigungsmechanismus 236 der Teleskopeinheit 114 gezeigt, der dazu ausgebildet ist, im unbetätigten Zustand eine Bewegung der Teleskopeinheit 114 zu verhindern. Die Gehäuseführung 234 umfasst Führungselemente 238, die beispielhaft als Führungsschienen ausgebildet sind. Die Führungselemente 238 sind derart im Gehäuse 102 der Zubehörvorrichtung 100 angeordnet, dass im montierten Zustand die Teleskopeinheit 114, insbesondere das Teleskopelement 140, an zumindest einer Seitenfläche der Führungselemente 238 geführt ist. Die Führungselemente 238 sind an die Innenseite des Gehäuses 102 angeformt. Alternativ zu dieser einteiligen Ausbildung der Führungselemente 238 mit dem Gehäuse 102 ist es auch denkbar, dass die Führungselemente 238 durch separate Gehäuseelemente ausgebildet sein können. Die Kontaktflächen der Teleskopeinheit 114 mit den Führungselementen 238 stellen Verschleißflächen 240 dar, da an dieser Stelle bei jeder Bewegung der Teleskopeinheit 114 eine Reibung zwischen der Teleskopeinheit 114 und der Gehäuseführung 234 entsteht. Um eine Verschiebbarkeit der Teleskopeinheit 114 in der Gehäuseführung 234 sicherzustellen, ist ein kleines Spiel zwischen den Kontaktflächen vorgesehen.

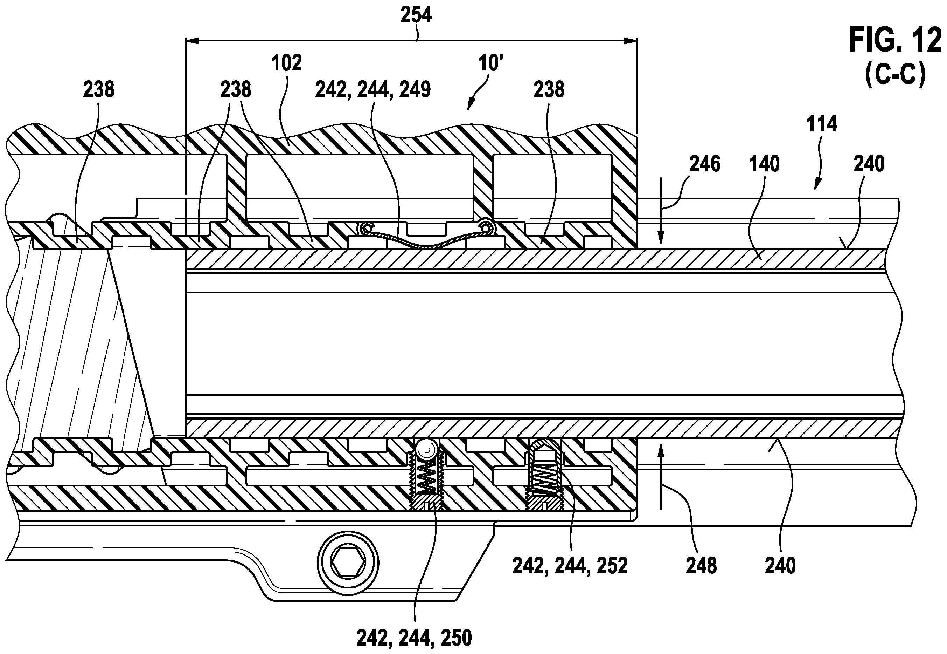

In Fig. 12 ist eine alternative Ausführungsform der Zubehörvorrichtung 100 gezeigt, die im Wesentlichen sämtliche Merkmale der zuvor beschriebenen Zubehörvorrichtung 100 aufweist und beispielhaft Sicherungselemente 242 aufweist, die dem Verschleiß an den Verschleißflächen 240 entgegenwirken. Der Längsschnitt in Fig. 12 verläuft dabei entlang der in Fig. 11 eingezeichneten Ebene C. Die Zubehörvorrichtung 100 weist beispielhaft drei unterschiedliche Sicherungselemente 242 auf, die zwischen der Teleskopeinheit 114 und dem Gehäuse 102 angeordnet sind. Die Sicherungselemente 242 sind beispielhaft am Gehäuse 102 der Zubehörvorrichtung 100 befestigt, es ist allerdings auch denkbar, dass die Sicherungselemente 242 an der Teleskopeinheit 114 befestigt sind. Die Sicherungselemente 242 sind als mechanische Energiespeicherelemente 244 ausgebildet. Die Teleskopeinheit 114, insbesondere das Teleskopelement 140, wird durch die Sicherungselemente 242 in eine erste Richtung 246 und eine der ersten Richtung entgegengesetzten Richtung 248 vorgespannt. Die erste Richtung 246 entspricht dabei der Richtung der Schwerkraft. Das erste Sicherungselement 242 ist als ein Federblech 249 ausgebildet. Das Federblech 249 liegt mittig am Teleskopelement 140 an und spannt diese in Richtung seiner Federkraft vor. Das zweite Sicherungselement 242 ist als Kugeldruckstück 250 ausgebildet. Das Kugeldruckstück 250 ist aus einer federbeaufschlagten Kugel ausgebildet, die im Gehäuse 102 der Zubehörvorrichtung 100 gelagert ist. Das dritte Sicherungselement 242 ist als Rastkappe 252 ausgebildet.

Die Teleskopeinheit 114 ist in Fig. 12 in einem ausgefahrenen Zustand gezeigt. Im ausgefahrenen Zustand umschließt das Gehäuse 102 die Teleskopeinheit 114 in einem Eingangsbereich 254. Die Verschleißflächen 240 innerhalb dieses Eingangsbereichs 254 werden im Gegensatz zu den Verschleißflächen 240 außerhalb dieses Eingangsbereichs 254 bei jeder Bewegung der Teleskopeinheit 114 beansprucht. Die Sicherungselemente 242 sind daher vorteilhaft im Eingangsbereich 254 angeordnet.

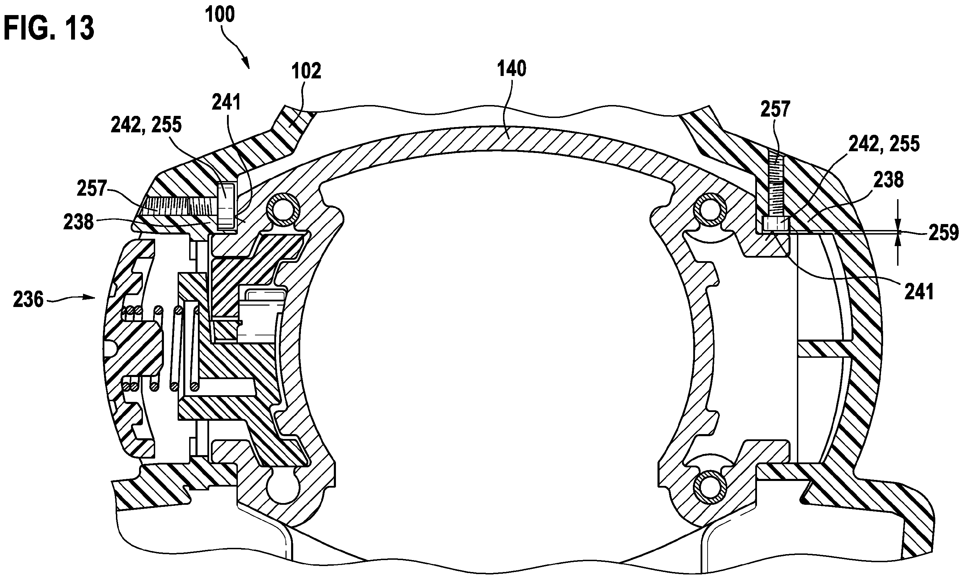

In Fig. 13 ist in einer zweiten alternativen Ausführungsform der Zubehörvorrichtung 100 ein Sicherungselement 242 gezeigt, dass keine Vorspannung erzeugt, sondern derart verbaut ist, dass erst nach Erreichen einer Verschleißschwelle eine Kontaktfläche 241 des Sicherungselements 242 zu einer Verschleißfläche wird. Das Sicherungselement 242 ist in Fig. 13 beispielhaft als ein metallisches Element, insbesondere eine Schraube 255, ausgebildet, die vom Gehäuse 102 der Zubehörvorrichtung 100 aufgenommen ist. Die Schraube 255 ist derart im Gehäuse 102 angeordnet, dass in einem Zustand der Zubehörvorrichtung ohne Verschleiß kein Kontakt zwischen der Schraube 255 und dem Teleskopelement 140 vorhanden ist. Es ist ebenfalls denkbar, dass die Schraube 255 in dem Schraubloch 257 zunächst versenkt ist. Der Abstand 259 zwischen einem Schraubkopf der Schraube 255 und dem oberen Ende eines Schraublochs 257 definiert eine Verschleißschwelle. Nachdem das obere Ende des Schraublochs 257 durch Reibung verschlissen ist, wäre die Verschleißschwelle erreicht, und das Sicherungselement 242 in Form der Schraube 255 gelangt in Kontakt mit dem Teleskopelement 140.

Das Teleskopelement 140 ist aus einem metallischen Werkstoff, insbesondere Aluminium geformt, die Führungselemente 243 bestehen aus Kunststoff. Somit bilden das Teleskopelement 140 und die Führungselemente 238 vorteilhaft eine Kunststoff/Metall Paarung aus, die den Verschleiß weiter verringern.

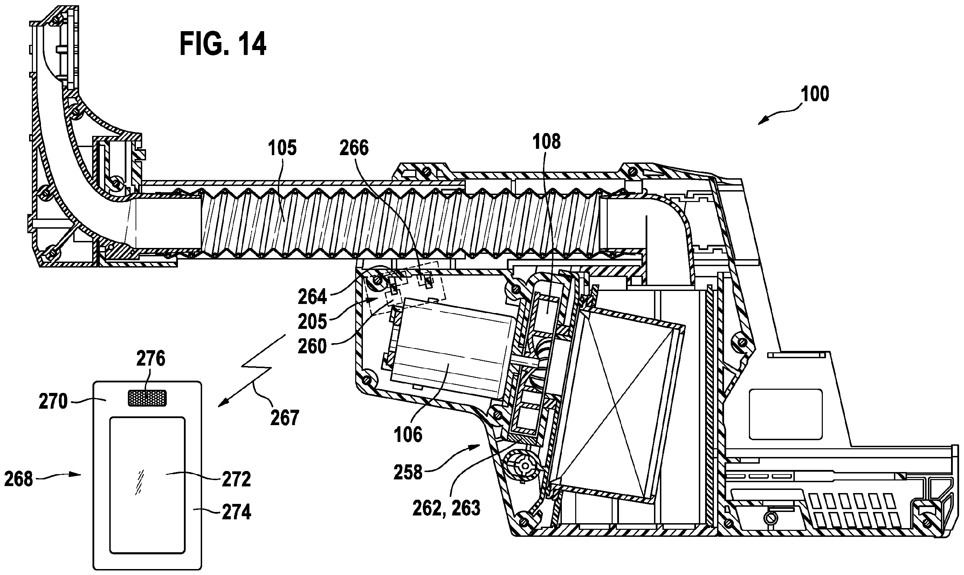

In Fig. 14 ist ein Längsschnitt einer dritten alternativen Ausführungsform der Zubehörvorrichtung 100 mit einer Sensoreinheit 258 gezeigt, die dazu ausgebildet ist, eine Veränderung des Drucks und/oder des Volumenstroms zu detektieren. Die Sensoreinheit 258 umfasst ein Motorsensorelement 260, das dazu ausgebildet ist, die Drehzahl des Elektromotors 106 zu detektieren und ein insbesondere elektronisches Luftsensorelement 262, das dazu ausgebildet ist, eine Veränderung des Drucks und/oder des Volumenstroms innerhalb der Zubehörvorrichtung 100 zu detektieren. Eine Kombination des Motorsensorelements 260 mit dem elektronischen Luftsensorelement 262 ist zur Funktionsfähigkeit der Sensoreinheit 258 zwar nicht zwingend notwendig, kann aber dazu genutzt werden, die Genauigkeit der Detektion zu erhöhen. Die Sensoreinheit 258 weist zudem eine Steuereinheit 264 auf, die dazu ausgebildet ist, das Signal des Motorsensorelements 260 und des Luftsensorelements 262 auszuwerten. Das Motorsensorelement 260 ist beispielhaft als Teil der Elektronik 205 der Zubehörvorrichtung 100 ausgebildet. Die Elektronik 205 der Zubehörvorrichtung 100 ist insbesondere dazu ausgebildet, den Elektromotor 106 zu steuern. Eine Änderung des Drucks und/oder des Volumenstroms hat eine Veränderung der Drehzahl des Elektromotors 106 zur Folge, die über den an dem Elektromotor 106 angelegten Strom durch die Elektronik 205 messbar ist. Das Luftsensorelement 262 ist beispielhaft als ein handelsüblicher Drucksensor 263 ausgebildet, der elektrisch mit der Steuereinheit 264 verbunden ist. Das Luftsensorelement 262 ist vorteilhaft im Bereich des Lüfterelements 108 angeordnet. Die Steuereinheit 264 erfasst die Eingangssignale des Motorsensorelements 260 und des Luftsensorelements 262 und ermittelt auf Basis eines Vergleichs der Werte der Eingangssignale oder der zeitlichen Veränderung der Eingangssignale den Zustand der Zubehörvorrichtung 100. In Abhängigkeit eines ermittelten verstopften Zustands der Zubehörvorrichtung 100, beziehungsweise des Luftkanals 105 der Zubehörvorrichtung 100, wird ein Fehlersignal ausgegeben. Die Ausgabe des Fehlersignals erfolgt insbesondere über eine Kommunikationsschnittstelle 266, die zur drahtlosen Übertragung 267 von Informationen an eine Anzeigeeinheit 268 ausgebildet ist. Die Anzeigeeinheit 268 ist beispielhaft als ein Smartphone 270 ausgebildet, welches des Fehlersignal der Sensoreinheit 258 empfängt und in Abhängigkeit des Fehlersignals ein optisches Anzeigeelement 272, ein haptisches Anzeigeelement 274 und/oder ein akustisches Anzeigeelement 276 ansteuert. Das Fehlersignal kann optisch über das als Bildschirm ausgebildete optische Anzeigeelement 272, haptische über das als Vibrationsmechanismus ausgebildete haptische Anzeigeelement 274 und akustisch durch das als Lautsprecher ausgebildete akustische Anzeigeelement 276 ausgegeben werden.

Es ist ebenfalls denkbar, dass in einer alternativen Ausführungsform die Anzeigeeinheit 268 zumindest teilweise am Gehäuse 102 der Zubehörvorrichtung 100 oder am Gehäuse 12 der Handwerkzeugmaschine 10 angeordnet ist. Die Kommunikationsschnittstelle 266 kann in diesem Ausführungsbeispiel dazu ausgebildet sein, das Fehlersignal über einen elektrischen Kontakt und/oder über eine drahtlose Verbindung an die Anzeigeeinheit 268 zu übertragen.

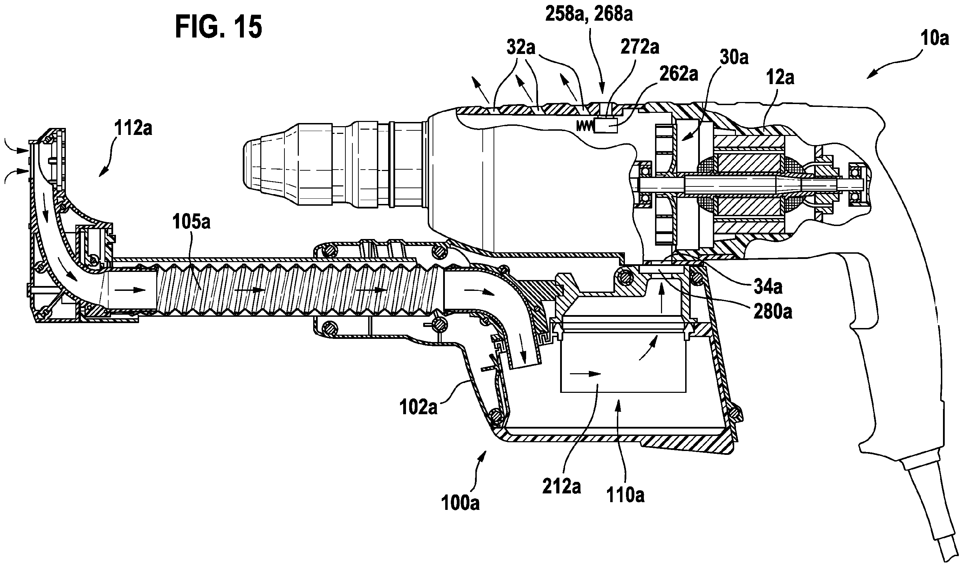

In Fig. 15 ist eine vierte Ausführungsform der Zubehörvorrichtung 100a mit einer alternativen Ausführungsform der Sensoreinheit 258a gezeigt, in der das Anzeigeelement 272a der Anzeigeeinheit 268a als Füllstandanzeige ausgebildet ist. Diese Ausführungsform unterscheidet sich zudem von den vorherigen Ausführungsformen dadurch, dass die Zubehörvorrichtung 100a keine Lüftereinheit aufweist. Der für die Zubehörvorrichtung 100a benötige Luftstrom wird anstelle der Lüftereinheit über die Motorkühlung 30a der Handwerkzeugmaschine 10a erzeugt, und der Luftkanal 105a der Zubehörvorrichtung 100a verläuft von dem Saugkopf 112a der Zubehörvorrichtung 100a über ein Filterelement 212a hin zu Luftauslassöffnungen 32a, die auf der Oberseite des Gehäuses 12a der Handwerkzeugmaschine 10a angeordnet sind. Die Motorkühlung 30a der Handwerkzeugmaschine 10a umfasst bevorzugt ein Lüfterelement, welches als Doppellüfter ausgebildet ist. Vorteilhaft umfasst das Lüfterelement der Handwerkzeugmaschine 10a zwei unterschiedliche Luftleit- beziehungsweise Schaufelgeometrien, wobei die eine Luftleitgeometrie zur Versorgung des Elektromotors der Handwerkzeugmaschine 10a mit Kühlluft und die andere Luftleitgeometrie zu Versorgung der Zubehörvorrichtung 100a mit Kühlluft vorgesehen ist. Die Luftauslassöffnungen 32a sind vorteilhaft derart geformt, dass die ausströmende Luft asymetrisch, vorteilhaft weg vom Benutzer, aus der Handwerkzeugmaschine 10a geführt wird. Das Gehäuse 102a der Zubehörvorrichtung 100a und das Gehäuse 12a der Handwerkzeugmaschine 10a weisen zueinander korrespondierende Übergangsöffnungen 34a, 280a auf, über die der Luftstrom von der Zubehörvorrichtung 100a in die Handwerkzeugmaschine 10a eindringen kann. Die Übergangsöffnungen 34a, 280a sind unterhalb der Motorkühlung 30a der Handwerkzeugmaschine 10a und oberhalb des Filterelements 212a angeordnet. Es ist denkbar, die Sensoreinheit 258a an unterschiedlichen Positionen, insbesondere in Strömungsrichtung hinter dem Filterelement 212a anzuordnen. Die Sensoreinheit 258a ist vorteilhaft an der Oberseite des Gehäuses 12a der Handwerkzeugmaschine 10a, insbesondere im Bereich der Luftauslassöffnungen 32a, angeordnet.

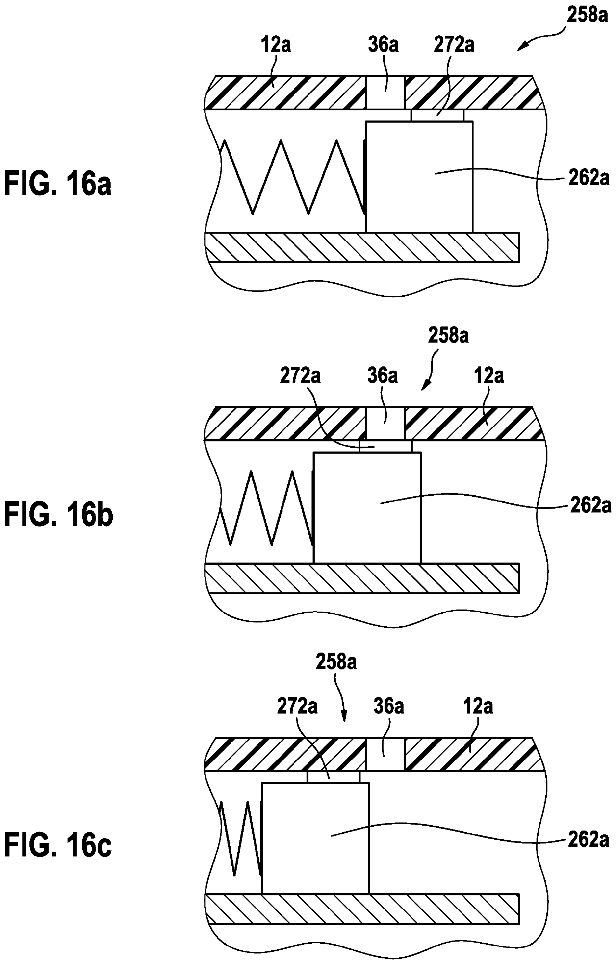

Wie in Fig. 16 a-c näher gezeigt ist, weist die Sensoreinheit 258a ein mechanisches Luftsensorelement 262a auf, das entgegen einer Federkraft beweglich gelagert ist. Eine Veränderung des Drucks oder des Volumenstroms im Bereich des mechanischen Luftsensorelements 262a führt dabei zu einer Änderung der Position des mechanischen Luftsensorelements 262a. Die Bewegung eines optischen Anzeigeelements 272a ist gekoppelt mit der Bewegung des mechanischen Luftsensorelements 262a. Vorteilhaft weist das Gehäuse 12a der Handwerkzeugmaschine 10a ein Fenster oder eine Öffnung 36a auf, durch die die Position des Anzeigeelements 272a verfolgt werden kann, wobei durch die Position des Anzeigeelements 272a der Füllstand der Staubsammelbox 110a der Zubehörvorrichtung 100a ermittelbar ist. In Fig. 16a zeigt die Position des Anzeigeelements 272a eine leere Staubsammelbox 110a an; in Fig. 16b zeigt die Position des Anzeigeelements 272a eine volle Staubsammelbox 110a an; in Fig. 16c ist die Handwerkzeugmaschine 10a ausgeschaltet.

## Patentansprüche

1. Zubehörvorrichtung für eine Handwerkzeugmaschine (10), insbesondere für eine Handwerkzeugmaschine (10) mit einem Schlagwerk, mit einer Staubsammelbox (110), wobei die Staubsammelbox (110) ein Gehäuse (115), das über eine erste Befestigungseinheit (113) mit einem Gehäuse (102) der Zubehörvorrichtung (100) verbindbar ausgebildet ist, und eine Filtereinheit (146), die dazu ausgebildet ist, einen Luftstrom zu filtern, aufweist, und wobei die Filtereinheit (146) über eine zweite Befestigungseinheit (162) mit dem Gehäuse (115) der Staubsammelbox (110) verbindbar ausgebildet ist,
wobei die Filtereinheit (146) ein erstes staubsammelboxseitig angeordnetes Dichtelement (152) aufweist, über das die Filtereinheit (146) gegenüber dem Gehäuse (115) der Staubsammelbox (110) abdichtbar ist, **dadurch gekennzeichnet, dass** die Filtereinheit (146) ein zweites zubehörvorrichtungsseitig angeordnetes Dichtelement (154) aufweist, über das die Filtereinheit (146) gegenüber dem Gehäuse (102) der Zubehörvorrichtung (100) abdichtbar ist.

2. Zubehörvorrichtung nach Anspruch 1, **dadurch gekennzeichnet, dass** die erste Befestigungseinheit (113) zumindest ein erstes Betätigungselement (174) aufweist, wobei über eine Betätigung des Betätigungselements (174) die Verbindung zwischen der Staubsammelbox (110) und der Zubehörvorrichtung (100) lösbar ist.

3. Zubehörvorrichtung nach einem der vorherigen Ansprüche, **dadurch gekennzeichnet, dass** die zweite Befestigungseinheit (162) zumindest ein zweites Betätigungselement (164) aufweist, wobei über eine Betätigung des Betätigungselements (164) die Verbindung zwischen der Staubsammelbox (110) und der Filtereinheit (146) lösbar ist.

4. Zubehörvorrichtung nach einem der vorherigen Ansprüche, **dadurch gekennzeichnet, dass** die Filtereinheit (146) ein Filterelement (150) aufweist, welches an einem Rahmenelement (148) befestigt ist.

5. Zubehörvorrichtung nach Anspruch 3, **dadurch gekennzeichnet, dass** das zumindest eine Betätigungselement (164) der zweiten Befestigungseinheit (162) an dem Rahmenelement (148) angeformt ist.

6. Zubehörvorrichtung nach einem der vorherigen Ansprüche, **dadurch gekennzeichnet, dass** die Staubsammelbox (110) in radialer Richtung zu einer Arbeitsachse (28) der Handwerkzeugmaschine (10) von dem Gehäuse (102) der Zubehörvorrichtung (100) aufnehmbar ist.

7. Zubehörvorrichtung nach einem der vorherigen Ansprüche, **dadurch gekennzeichnet, dass** die Staubsammelbox (110) in Umfangsrichtung zumindest teilweise von dem Gehäuse (102) der Zubehörvorrichtung (100) umschlossen ist.

8. Zubehörvorrichtung nach einem der vorherigen Ansprüche, **dadurch gekennzeichnet, dass** das Gehäuse (102) der Zubehörvorrichtung (100) zumindest eine Ausnehmung (116) aufweist, über die der Füllstand der Staubsammelbox (110) erkennbar ist.

9. Zubehörvorrichtung nach einem der vorherigen Ansprüche, **dadurch gekennzeichnet, dass** die Staubsammelbox (110), insbesondere die Filtereinheit (146), zumindest teilweise im an der Zubehörvorrichtung (100) befestigten Zustand an einem mit Spiel gelagerten Gehäuseelement (156) anliegt.

## Claims

1. Accessory device for a hand-held power tool (10), in particular for a hand-held power tool (10) having an impact mechanism, having a dust collecting box (110), wherein the dust collecting box (110) has a housing (115), which is designed to be connectable to a housing (102) of the accessory device (100) via a first fastening unit (113), and a filter unit (146), which is designed to filter an air flow, and wherein the filter unit (146) is designed to be connectable to the housing (115) of the dust collecting box (110) via a second fastening unit (162),
wherein
the filter unit (146) has a first sealing element (152) which is arranged on the dust collecting box and via which the filter unit (146) is able to be sealed off from the housing (115) of the dust collecting box (110), **characterized in that** the filter unit (146) has a second sealing element (154) which is arranged on the accessory device and via which the filter unit (146) is able to be sealed off from the housing (102) of the accessory device (100) .

2. Accessory device according to Claim 1, **characterized in that** the first fastening unit (113) has at least one first actuating element (174), wherein, via actuation of the actuating element (174), the connection between the dust collecting box (110) and the accessory device (100) is releasable.

3. Accessory device according to either of the preceding claims, **characterized in that** the second fastening unit (162) has at least one second actuating element (164), wherein, via actuation of the actuating element (164), the connection between the dust collecting box (110) and the filter unit (146) is releasable.

4. Accessory device according to one of the preceding claims, **characterized in that** the filter unit (146) has a filter element (150) which is fastened to a frame element (148).

5. Accessory device according to Claim 3, **characterized in that** the at least one actuating element (164) of the second fastening unit (162) is integrally formed on the frame element (148).

6. Accessory device according to one of the preceding claims, **characterized in that** the dust collecting box (110) is removable from the housing (102) of the accessory device (100) in a radial direction with respect to a working axis (28) of the hand-held power tool (10).

7. Accessory device according to one of the preceding claims, **characterized in that** the dust collecting box (110) is enclosed at least partially by the housing (102) of the accessory device (100) in the circumferential direction.

8. Accessory device according to one of the preceding claims, **characterized in that** the housing (102) of the accessory device (100) has at least one recess (116) via which the filling level of the dust collecting box (110) is able to be seen.

9. Accessory device according to one of the preceding claims, **characterized in that** the dust collecting box (100), in particular the filter unit (146) bears, at least partially, in the state fastened to the accessory device (100), on a housing element (156) mounted with play.

## Revendications

1. Dispositif accessoire pour une machine-outil portative (10), notamment pour une machine-outil portative (10) avec un mécanisme de frappe, avec une boîte de collecte de poussière (110), la boîte de collecte de poussière (110) présentant un boîtier (115), qui est configuré pour pouvoir être relié à un boîtier (102) du dispositif accessoire (100) par l'intermédiaire d'une première unité de fixation (113), et une unité de filtration (146), qui est configurée pour filtrer un courant d'air, et l'unité de filtration (146) étant configurée pour pouvoir être reliée au boîtier (115) de la boîte de collecte de poussière (110) par l'intermédiaire d'une deuxième unité de fixation (162), l'unité de filtration (146) présentant un premier élément d'étanchéité (152) agencé du côté de la boîte de collecte de poussières, par l'intermédiaire duquel l'unité de filtration (146) peut être étanchéifiée par rapport au boîtier (115) de la boîte de collecte de poussière (110), **caractérisé en ce que** l'unité de filtration (146) présente un deuxième élément d'étanchéité (154) agencé du côté du dispositif accessoire, par l'intermédiaire duquel l'unité de filtration (146) peut être étanchéifiée par rapport au boîtier (102) du dispositif accessoire (100) .

2. Dispositif accessoire selon la revendication 1, **caractérisé en ce que** la première unité de fixation (113) présente au moins un premier élément d'actionnement (174), la liaison entre la boîte de collecte de poussière (110) et le dispositif accessoire (100) pouvant être détachée par l'intermédiaire d'un actionnement de l'élément d'actionnement (174).

3. Dispositif accessoire selon l'une quelconque des revendications précédentes, **caractérisé en ce que** la deuxième unité de fixation (162) présente au moins un deuxième élément d'actionnement (164), la liaison entre la boîte de collecte de poussière (110) et l'unité de filtration (146) pouvant être détachée par l'intermédiaire d'un actionnement de l'élément d'actionnement (164).

4. Dispositif accessoire selon l'une quelconque des revendications précédentes, **caractérisé en ce que** l'unité de filtration (146) présente un élément de filtration (150) qui est fixé à un élément de cadre (148).

5. Dispositif accessoire selon la revendication 3, **caractérisé en ce que** l'au moins un élément d'actionnement (164) de la deuxième unité de fixation (162) est formé sur l'élément de cadre (148).

6. Dispositif accessoire selon l'une quelconque des revendications précédentes, **caractérisé en ce que** la boîte de collecte de poussière (110) peut être reçue par le boîtier (102) du dispositif accessoire (100) dans une direction radiale par rapport à un axe de travail (28) de la machine-outil portative (10).

7. Dispositif accessoire selon l'une quelconque des revendications précédentes, **caractérisé en ce que** la boîte de collecte de poussière (110) est au moins partiellement entourée dans la direction circonférentielle par le boîtier (102) du dispositif accessoire (100).

8. Dispositif accessoire selon l'une quelconque des revendications précédentes, **caractérisé en ce que** le boîtier (102) du dispositif accessoire (100) présente au moins un évidement (116), par l'intermédiaire duquel le niveau de remplissage de la boîte de collecte de poussière (110) peut être identifié.

9. Dispositif accessoire selon l'une quelconque des revendications précédentes, **caractérisé en ce que** la boîte de collecte de poussière (110), notamment l'unité de filtration (146), repose au moins partiellement, à l'état fixé sur le dispositif accessoire (100), sur un élément de boîtier (156) monté avec jeu.
